# EUROPEAN PATENT APPLICATION

(11) **EP 4 585 626 A1**
(43) Date of publication of application: **16.07.2025**
(21) Application number: 23863273.1
(22) Date of filing: 08.09.2023
(51) Int. Cl.: C08F 265/06, C10N 30/06, C10N 40/02, C10N 40/04, C10N 40/08, C10N 40/20, C10N 40/25, C10M 145/14, C10M 149/04, C10M 149/06

(54) **POLYMER, FRICTION REDUCER FOR LUBRICATING OIL, AND LUBRICATING OIL COMPOSITION**

(30) Priority: 09.09.2022 JP 2022143787
(71) Applicant: Mitsubishi Chemical Corporation, Tokyo 100-8251 (JP)
(72) Inventor: TOKUE, Hiroshi, Tokyo 100-8251 (JP); MATSUMURA, Kazunari, Tokyo 100-8251 (JP); MASUDA, Eri, Tokyo 100-8251 (JP)
(74) Representative: Hoffmann Eitle
(86) International application number: PCT/JP2023/032863
(87) International publication number: WO 2024/053735

(57) **Abstract**

A polymer includes a main chain polymer structure and a side chain polymer structure, in which the side chain polymer structure contains a constitutional unit derived from an alkyl (meth)acrylate (a) having an alkyl group having 11 to 30 carbon atoms, and at least one of the main chain polymer structure or the side chain polymer structure contains a constitutional unit derived from a (meth)acrylate (b) represented by General Formula (1). In Formula (1), R¹ represents a hydrogen atom or a methyl group, and R² represents a hydrogen atom or an organic group containing a polar group. However, the organic group containing a polar group does not include an alkoxyalkyl group.

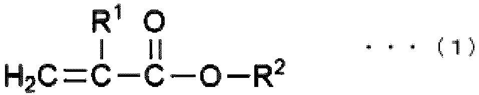

## Description

### TECHNICAL FIELD

The present invention relates to a polymer for use in engine oils and the like, a friction reducer for a lubricating oil, and a lubricating oil composition.

Priority is claimed on Japanese Patent Application No. 2022-143787, filed in Japan on September 9, 2022, the entire contents of which are incorporated herein by reference.

### BACKGROUND ART

Various types of friction reducers are blended into lubricating oils such as engine oils or drive system oils of automobiles for the purpose of reducing energy loss due to friction or extending a service life of equipment by the prevention of burn-in. In recent years, in the background of reducing the viscosity of lubricating oils for the purpose of saving fuel, the load on the contact surfaces between metals becomes increasingly severe, so the role of friction reducers becomes even more important.

Examples of the friction reducer include oiliness improvers such as long-chain fatty acid esters and fatty acid amides, anti-wear agents such as phosphate esters and zinc dithiophosphates, extreme pressure agents such as organic sulfur compounds and organic halogen compounds, and friction adjusters such as organic molybdenum compounds. However, there is a problem in that an effect of reducing friction is insufficient only with these additives depending on the use conditions and the use environment. In order to overcome this problem, studies have been made on using a polymer material as the friction reducer. For example, Patent Document 1 discloses that a comb polymer containing a repeating unit derived from a polyolefin-based macromonomer and a repeating unit derived from a low-molecular-weight monomer can be suitably used as a friction modifier (friction improver). In addition, Patent Document 2 discloses that a (meth)acrylic graft copolymer can be suitably used as a friction adjuster.

### Citation List

### Patent Documents

Patent Document 1: Published Japanese Translation No. 2020-502344 of the PCT International Publication
Patent Document 2: Japanese Unexamined Patent Application, First Publication No. 2022-113676

### SUMMARY OF THE INVENTION

### Technical Problem

However, an effect of reducing friction is insufficient in the methods described in Published Japanese Translation No. 2020-502344 of the PCT International Publication and Japanese Unexamined Patent Application, First Publication No. 2022-113676.

An object of the present invention is to provide a polymer, and to provide a polymer that can be used to provide a polymer lubricating oil additive, a friction reducer for a lubricating oil, and a lubricating oil composition, which have a high friction reducing effect.

### MEANS TO SOLVE THE PROBLEM

[1] A polymer comprising:
   a main chain polymer structure; and
   a side chain polymer structure,
   wherein the side chain polymer structure contains a constitutional unit derived from an alkyl (meth)acrylate (a) having an alkyl group having 11 to 30 carbon atoms, and
   at least one of the main chain polymer structure or the side chain polymer structure contains a constitutional unit derived from a (meth)acrylate (b) represented by General Formula (1), 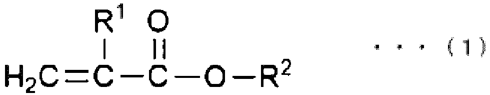 (in the formula, R¹ represents a hydrogen atom or a methyl group, and R² represents a hydrogen atom or an organic group containing a polar group, provided that the organic group containing a polar group does not include an alkoxyalkyl group).
[2] The polymer according to [1], wherein a polar group of the (meth)acrylate (b) is a hydroxyl group, a carboxy group, an amino group, or an amide group.
[3] The polymer according to [1] or [2], wherein a polar group of the (meth)acrylate (b) is a hydroxyl group.
[4] The polymer according to any one of [1] to [3], wherein the polymer further contains a constitutional unit derived from an alkyl (meth)acrylate (c) having an alkyl group having 1 to 10 carbon atoms.
[5] The polymer according to any one of [1] to [4], wherein the main chain polymer structure contains a constitutional unit derived from an alkyl (meth)acrylate (a) having an alkyl group having 11 to 30 carbon atoms.
[6] The polymer according to any one of [1] to [5], wherein a proportion of the main chain polymer structure is preferably 25% to 98% by mass, more preferably 30% to 95% by mass, and still more preferably 40% to 90% by mass with respect to a total mass of the polymer.
[7] The polymer according to any one of [1] to [6], wherein a proportion of the side chain polymer structure is preferably 2% to 75% by mass, more preferably 5% to 70% by mass, and still more preferably 10% to 60% by mass with respect to a total mass of the polymer.
[8] The polymer according to any one of [1] to [7], wherein the alkyl (meth)acrylate (a) is preferably a linear or branched alkyl (meth)acrylate having 11 to 20 carbon atoms, more preferably a linear or branched alkyl methacrylate having 11 to 20 carbon atoms, still more preferably a linear or branched alkyl methacrylate having 11 to 18 carbon atoms, and particularly preferably a linear or branched alkyl methacrylate having 12 to 14 carbon atoms.
[9] The polymer according to any one of [1] to [8], wherein a contained amount of the constitutional unit derived from the alkyl (meth)acrylate (a) is preferably 30% to 100% by mass, more preferably 50% to 100% by mass, and still more preferably 80% to 99% by mass with respect to a total mass of the side chain polymer structure.
[10] The polymer according to any one of [1] to [9], wherein a contained amount of the constitutional unit derived from the alkyl (meth)acrylate (a) is preferably 20% to 90% by mass, more preferably 25% to 85% by mass, and still more preferably 30% to 80% by mass with respect to a total mass of the polymer.
[11] The polymer according to any one of [1] to [10], wherein the polar group of the (meth)acrylate (b) is preferably a hydroxyl group, a carboxy group, an aliphatic heterocyclic ring having 2 to 6 carbon atoms, an aromatic heterocyclic ring having 4 to 10 carbon atoms, an alkoxysilyl group, a trialkoxysilyl group having 3 to 9 carbon atoms, a phosphate group, a phosphate ester group, an amino group, or an amide group; more preferably a hydroxyl group, a carboxy group, an amino group, or an amide group; and still more preferably a hydroxyl group.
[12] The polymer according to any one of [1] to [11], wherein a total number of carbon atoms in the (meth)acrylate (b) is preferably 3 to 10, more preferably 3 to 9, and still more preferably 3 to 8.
[13] The polymer according to any one of [1] to [12], wherein a contained amount of the constitutional unit derived from the (meth)acrylate (b) is preferably 0.01% by mass or more and 20% by mass or less, more preferably 0.05% by mass or more and 15% by mass or less, still more preferably 0.1% by mass or more and 5% by mass or less, and particularly preferably 0.5% by mass or more and 3% by mass or less with respect to a total mass of the polymer.
[14] The polymer according to any one of [1] to [13], wherein the polymer further contains a constitutional unit derived from an alkyl (meth)acrylate (c) having an alkyl group having 1 to 10 carbon atoms.
[15] The polymer according to any one of [1] to [14], wherein the polymer further contains a constitutional unit derived from an alkyl (meth)acrylate (c) having an alkyl group having 1 to 10 carbon atoms, and the alkyl (meth)acrylate (c) is preferably an alkyl (meth)acrylate having 1 to 4 carbon atoms, more preferably an alkyl acrylate having 1 to 4 carbon atoms, and still more preferably n-butyl acrylate.
[16] The polymer according to any one of [1] to [15], wherein the polymer further contains a constitutional unit derived from an alkyl (meth)acrylate (c) having an alkyl group having 1 to 10 carbon atoms, and a contained amount of the constitutional unit derived from the alkyl (meth)acrylate (c) is preferably 20% by mass or more and 95% by mass or less, more preferably 30% by mass or more and 90% by mass or less, and still more preferably 45% by mass or more and 80% by mass or less with respect to a total mass of the polymer.
[17] The polymer according to any one of [1] to [16], wherein a total contained amount of the constitutional unit derived from the alkyl (meth)acrylate (a), the constitutional unit derived from the (meth)acrylate (b) represented by General Formula (1), and the constitutional unit derived from the alkyl (meth)acrylate (c) having an alkyl group having 1 to 10 carbon atoms is preferably 70% to 100% by mass, more preferably 80% to 100% by mass, and still more preferably 90% to 100% by mass with respect to a total mass of the polymer.
[18] The polymer according to any one of [1] to [17], wherein the main chain polymer structure contains a constitutional unit derived from a vinyl-based radical polymerizable monomer (m1), and at least a part of the constitutional unit derived from the vinyl-based radical polymerizable monomer (m1) is the constitutional unit derived from the (meth)acrylate (b).
[19] The polymer according to any one of [1] to [18], wherein the side chain polymer structure contains a constitutional unit derived from a macromonomer (M).
[20] The polymer according to [19], wherein the macromonomer (M) contains the constitutional unit derived from the alkyl (meth)acrylate (a) having an alkyl group having 11 to 30 carbon atoms.
[21] The polymer according to [19] or [20], wherein the macromonomer (M) has a structure of Formula (2), 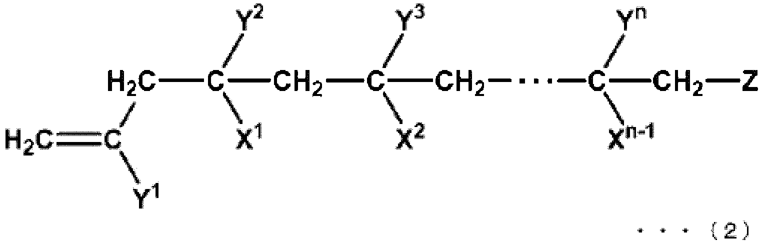 (in the formula, X¹ to Xⁿ⁻¹ each independently represent a hydrogen atom, a methyl group, or CH₂OH, Y¹ to Yⁿ each independently represent a substituent other than X¹ to Xⁿ⁻¹ which is bonded to a vinyl group of a vinyl-based radical polymerizable monomer (m2) that is a monomeric constitutional unit of the macromonomer (M), Z represents a terminal group, and n represents an integer of 2 to 10000).
[22] The polymer according to any one of [18] to [21], wherein the vinyl-based radical polymerizable monomer (m1) includes the (meth)acrylate (b) represented by General Formula (1) and the alkyl (meth)acrylate (c) having an alkyl group having 1 to 10 carbon atoms.
[23] The polymer according to any one of [18] to [22], wherein the vinyl-based radical polymerizable monomer (m2) includes the alkyl (meth)acrylate (a).
[24] The polymer according to any one of [19] to [23], wherein a contained amount of the constitutional unit derived from the alkyl (meth)acrylate (a) is preferably 80% to 100% by mass, more preferably 85% to 99.9% by mass, still more preferably 90% to 99.8% by mass, and particularly preferably 95% to 99.5% by mass with respect to a total mass of the macromonomer (M).
[25] The polymer according to any one of [19] to [24], wherein a contained amount of a constitutional unit derived from an alkyl (meth)acrylate (c) having an alkyl group having 1 to 10 carbon atoms is preferably more than 0% by mass and 20% by mass or less, more preferably 0.1% to 15% by mass, still more preferably 0.2% to 10% by mass, and particularly preferably 0.5% to 5% by mass with respect to a total mass of the macromonomer (M).
[26] The polymer according to any one of [18] to [25], wherein a ratio represented by [the contained amount of the constitutional unit derived from alkyl (meth)acrylate (c) having an alkyl group having 1 to 10 carbon atoms]/[the contained amount of the constitutional unit derived from the alkyl (meth)acrylate (a)] is preferably 0.001 to 3.5, more preferably 0.002 to 3.0, and still more preferably 0.005 to 2.6.
[27] The polymer according to any one of [19] to [26], wherein a contained amount of the constitutional unit derived from the macromonomer (M) is preferably 1% to 70% by mass, more preferably 2% to 60% by mass, and still more preferably 5% to 50% by mass with respect to a total mass of the polymer.
[28] The polymer according to any one of [19] to [27], wherein a mass average molecular weight (Mw) of the macromonomer (M) measured by gel permeation chromatography is preferably 2000 to 100000, more preferably 3000 to 80000, still more preferably 4000 to 50000, and particularly preferably 5000 to 30000.
[29] The polymer according to any one of [19] to [28], wherein a number-average molecular weight (Mn) of the macromonomer (M) measured by gel permeation chromatography (GPC) is preferably 500 to 30000, more preferably 1000 to 25000, still more preferably 2000 to 20000, and particularly preferably 3000 to 16000.
[30] The polymer according to any one of [19] to [29], wherein a molecular weight distribution (Mw/Mn) of the macromonomer (M) measured by gel permeation chromatography is preferably 1.0 to 5.0, more preferably 1.3 to 3.0, and still more preferably 1.5 to 2.5.
[31] The polymer according to any one of [1] to [30], wherein a mass average molecular weight (Mw) of the polymer measured by GPC is preferably 10000 or more and 500000 or less, more preferably 15000 or more and 300000 or less, and still more preferably 20000 or more and 200000 or less.
[32] The polymer according to any one of [1] to [31], wherein a number-average molecular weight (Mn) of the polymer measured by gel permeation chromatography (GPC) is preferably 5000 or more and 100000 or less, more preferably 10000 or more and 80000 or less, and still more preferably 15000 or more and 50000 or less.
[33] The polymer according to any one of [1] to [32], wherein a molecular weight distribution (Mw/Mn) of the polymer measured by gel permeation chromatography (GPC) is preferably 1.0 or more and 15 or less, more preferably 2.0 or more and 10 or less, and still more preferably 3.0 or more and 8.0 or less.
[34] The polymer according to any one of [1] to [33], wherein, in a case where a base oil solution containing 2% by mass of the polymer is prepared, a friction coefficient measured at 40°C using a SRV5 tester (manufactured by Optimol Instruments Pruftechnik GmbH) is preferably 0.16 or less, more preferably 0.155 or less, and still more preferably 0.15 or less.
[35] A lubricating oil additive comprising:
   the polymer according to any one of [1] to [34].
[36] A friction reducer for a lubricating oil, comprising:
   the polymer according to any one of [1] to [34]; and
   a solvent.
[37] The friction reducer for a lubricating oil according to [36], wherein the solvent is a base oil.
[38] The friction reducer for a lubricating oil according to [37], wherein the base oil is a base oil of API standard Group III, a base oil of API standard Group III Plus, or a base oil of API standard Group IV.
[39] The friction reducer for a lubricating oil according to any one of [36] to [38], wherein a contained amount of the polymer is preferably 10% to 80% by mass, more preferably 15% to 70% by mass, and still more preferably 20% to 60% by mass, in a case where a total mass of the lubricating oil additive is 100% by mass.
[40] A lubricating oil composition comprising:
   the friction reducer for a lubricating oil according to any one of [36] to [39].
[41] The lubricating oil composition according to [40], wherein a contained amount of the friction reducer for a lubricating oil is preferably 0.01% to 30% by mass, more preferably 0.05% to 25% by mass, and still more preferably 0.1% to 20% by mass, in a case where a total mass of the lubricating oil composition is 100% by mass.
[42] Use of the polymer according to any one of [1] to [34] for producing a lubricating oil composition.
[43] Use of the polymer according to any one of [1] to [34] for reducing friction.
[44] Use of the polymer according to any one of [1] to [34] for improving lubricity.
[45] Use of a composition comprising:
   the polymer according to any one of [1] to [34] for reducing friction.
[46] Use of a composition comprising:
   the polymer according to any one of [1] to [34] for improving lubricity.
[47] The use according to [45] or [46], wherein the composition contains a solvent.
[48] The use according to [47], wherein the solvent is a base oil.
[49] The use according to [48], wherein the base oil is a base oil of API standard Group III, a base oil of API standard Group III Plus, or a base oil of API standard Group IV.
[50] The use according to any one of [45] to [49], wherein a contained amount of the polymer is preferably 0.01% to 30% by mass, more preferably 0.05% to 25% by mass, and still more preferably 0.1% to 20% by mass, in a case where a total mass of the composition is 100% by mass.

In addition, the present invention has the following aspects.
[1] A friction reducer for a lubricating oil, which contains a (meth)acrylic graft copolymer A having a main chain polymer structure and a side chain polymer structure, wherein the (meth)acrylic graft copolymer A contains a constitutional unit derived from an alkyl (meth)acrylate (a) having an alkyl group having 11 to 30 carbon atoms in the side chain polymer structure, and contains a constitutional unit derived from a (meth)acrylate (b) represented by General Formula (1). 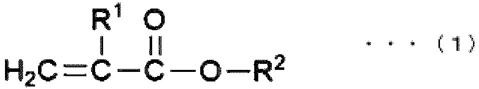 (In the formula, R¹ represents a hydrogen atom of a methyl group, and R² represents a hydrogen atom of an organic group containing a polar group. However, the organic group containing a polar group does not include an alkoxyalkyl group.)
[2] The friction reducer for a lubricating oil according to [1], wherein a polar group of the (meth)acrylate (b) is a hydroxyl group, a carboxy group, an amino group, or an amide group.
[3] The friction reducer for a lubricating oil according to [1], wherein the polar group of the (meth)acrylate (b) is a hydroxyl group.
[4] The friction reducer for a lubricating oil according to any one of [1] to [3], wherein the (meth)acrylic graft copolymer A further contains a constitutional unit derived from an alkyl (meth)acrylate (c) having an alkyl group having 1 to 10 carbon atoms.
[5] The friction reducer for a lubricating oil according to any one of [1] to [4], wherein the (meth)acrylic graft copolymer A contains, in the main chain polymer structure, a constitutional unit derived from an alkyl (meth)acrylate (a) having an alkyl group having 11 to 30 carbon atoms.
[6] The friction reducer for a lubricating oil according to any one of [1] to [5], wherein the (meth)acrylic graft copolymer A contains a constitutional unit derived from a vinyl-based radical polymerizable monomer (m1) and a constitutional unit derived from a macromonomer (M).
[7] The friction reducer for a lubricating oil according to [6], wherein the macromonomer (M) contains a constitutional unit derived from the alkyl (meth)acrylate (a) having an alkyl group having 11 to 30 carbon atoms.
[8] The friction reducer for a lubricating oil according to [6], wherein the macromonomer (M) has a structure of Formula (2). 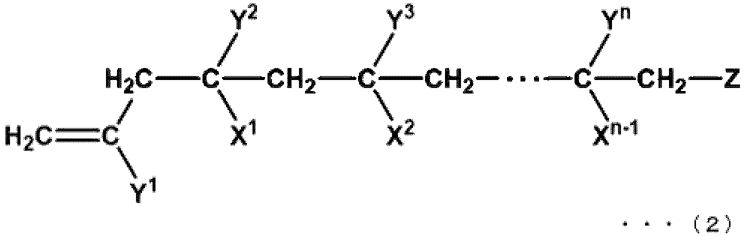 (In the formula, X¹ to Xⁿ⁻¹ each independently represent a hydrogen atom, a methyl group, or CH₂OH, and Y¹ to Yⁿ each independently represent a substituent other than X¹ to Xⁿ⁻¹ which is bonded to a vinyl group of a vinyl-based radical polymerizable monomer (m2) that is a monomeric constitutional unit of the macromonomer (M). Z represents a terminal group, and n represents an integer of 2 to 10000.)
[9] A lubricating oil composition comprising:
   the friction reducer for a lubricating oil according to any one of [1] to [8]. EFFECTS OF THE INVENTION

According to the polymer of the present invention, it is possible to provide a lubricating oil additive, a friction reducer for a lubricating oil, and a lubricating oil composition, which have a high friction reducing effect.

### DETAILED DESCRIPTION OF THE PREFERRED EMBODIMENTS

Hereinafter, the present invention will be described in more detail. The following embodiments are merely examples for explaining the present invention and the present invention is not intended to be limited only to these embodiments. The present invention can be implemented in various aspects without departing from the spirit and scope of the invention.

In the present invention, the "(meth)acrylic" is a general term for "acrylic" and "methacrylic". The "(meth)acrylate" is a general term for "acrylate" and "methacrylate". The "(meth)acryloyl group" is a general term for an acryloyl group and a methacryloyl group, and is a group represented by CH₂=C(R)-C(=O)- (R represents a hydrogen atom or a methyl group). The "macromonomer" refers to a polymeric substance having a radical polymerizable group or an addition-reactive functional group. The "vinyl-based radical polymerizable monomer" refers to a monomer having an ethylenically unsaturated bond, which is not a macromonomer.

The polymer according to the embodiment of the present invention is a polymer including a main chain polymer structure and a side chain polymer structure, in which the side chain polymer structure contains a constitutional unit derived from an alkyl (meth)acrylate (a) having an alkyl group having 11 to 30 carbon atoms, and at least one of the main chain polymer structure or the side chain polymer structure contains a constitutional unit derived from a (meth)acrylate (b) represented by General Formula (1).

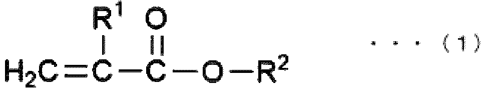

(In the formula, R¹ represents a hydrogen atom of a methyl group, and R² represents a hydrogen atom of an organic group containing a polar group. However, the organic group containing a polar group does not include an alkoxyalkyl group.)

The friction reducer for a lubricating oil contains a polymer.

The polymer refers to a copolymer in which at least a part of the constitutional units is a constitutional unit derived from a (meth)acrylic monomer. The polymer may further contain a constitutional unit derived from a monomer (for example, styrene) other than the (meth)acrylic monomer.

The polymer is preferably a graft copolymer composed of a main chain polymer structure and a side chain polymer structure (branch polymer structure) that is chemically bonded to the main chain polymer structure (trunk polymer structure). In the present specification, the graft copolymer is a polymer having one or more types of blocks connected as a side chain polymer structure to a main chain polymer structure. The structure of the main chain polymer and the structure of the side chain polymer may be different from each other or may be the same as each other. The method for producing the graft copolymer is not particularly limited, and examples thereof include a method in which a macromonomer having a radical polymerizable double bond at a terminal is produced as a side chain polymer structure, and is then subjected to radical polymerization with a monomer serving as a constitutional unit of a main chain polymer, a method in which a main chain polymer having a reaction point and a macromonomer having a reaction point are produced in advance, and then the main chain polymer and the macromonomer are reacted with each other, and a method in which, after producing a main chain polymer, a radical is generated on the main chain polymer using an initiator having a hydrogen abstraction ability, and a monomer serving as a constitutional unit of a side chain polymer is reacted to produce a side chain polymer structure.

It is preferable that the polymer is a graft copolymer which contains a constitutional unit derived from an alkyl (meth)acrylate (a) having an alkyl group having 11 to 30 carbon atoms (hereinafter, also referred to as a "component (a)") in a side chain polymer structure and contains a constitutional unit derived from a (meth)acrylate (b) represented by General Formula (1) (hereinafter, also referred to as a "component (b)").

Examples of the component (a) include n-undecyl (meth)acrylate, i-undecyl (meth)acrylate, n-dodecyl (meth)acrylate, i-dodecyl (meth)acrylate, n-tridecyl (meth)acrylate, i-tridecyl (meth)acrylate, n-tetradecyl (meth)acrylate, i-tetradecyl (meth)acrylate, n-cetyl (meth)acrylate, i-cetyl (meth)acrylate, n-stearyl (meth)acrylate, i-stearyl (meth)acrylate, n-octadecyl (meth)acrylate, i-octadecyl (meth)acrylate, n-behenyl (meth)acrylate, and i-behenyl (meth)acrylate. These (meth)acrylate compounds may be used in combination of two or more thereof.

From the viewpoint of excellent solubility in a base oil and an excellent friction reducing effect, the component (a) is preferably a linear or branched alkyl (meth)acrylate having 11 to 20 carbon atoms, more preferably a linear or branched alkyl methacrylate having 11 to 20 carbon atoms, still more preferably a linear or branched alkyl methacrylate having 11 to 18 carbon atoms, and particularly preferably a linear or branched alkyl methacrylate having 12 to 14 carbon atoms.

In addition, since the solubility in a base oil and the friction reducing performance can be made favorable, and the fuel saving property can be improved by reducing the viscosity of the lubricating oil composition, the contained amount of the constitutional unit derived from the component (a) is preferably 30% by mass or more, more preferably 50% by mass or more, and still more preferably 80% by mass or more with respect to the total mass of the side chain polymer structure.

In addition, since the solubility in a base oil and the friction reducing performance can be made favorable, and the fuel saving property can be improved by reducing the viscosity of the lubricating oil composition, the contained amount of the constitutional unit derived from the component (a) is preferably 20% to 90% by mass, more preferably 25% to 85% by mass, and still more preferably 30% to 80% by mass with respect to the total mass of the polymer.

It is preferable that, since the solubility of the polymer in a base oil can be made favorable, the polymer contains, as a constitutional unit, the constitutional unit derived from the component (a) in the main chain polymer structure.

The component (b) is a (meth)acrylate represented by General Formula (1) (hereinafter, the (meth)acrylate (b) represented by General Formula (1) is also referred to as a "polar group-containing (meth)acrylate (b)").

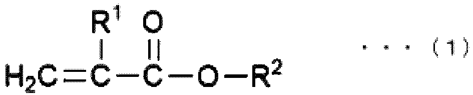

(In the formula, R¹ represents a hydrogen atom or a methyl group, and R² represents a hydrogen atom of an organic group containing a polar group. However, the organic group containing a polar group does not include an alkoxyalkyl group.)

Examples of the polar group include a hydroxyl group, a carboxy group, a heterocyclic structure (for example, an aliphatic heterocyclic ring having 2 to 6 carbon atoms or an aromatic heterocyclic ring having 4 to 10 carbon atoms), an alkoxysilyl group, a trialkoxysilyl group having 3 to 9 carbon atoms, a phosphate group, a phosphate ester group, an amino group (for example, a secondary amino group such as a dimethylamino group or a diethylamino group), and an amide group. Examples of the component (b) include (meth)acrylates having a hydroxyl group, such as 2-hydroxyethyl (meth)acrylate, 2-hydroxypropyl (meth)acrylate, 2-hydroxybutyl (meth)acrylate, 4-hydroxybutyl (meth)acrylate, 6-hydroxyhexyl (meth)acrylate, glycerin mono(meth)acrylate, polyethylene glycol mono(meth)acrylate, and polypropylene glycol mono(meth)acrylate; (meth)acrylates containing a carboxy group, such as (meth)acrylic acid, 2-(meth)acryloyloxyethyl succinate, 2-(meth)acryloyloxyethyl maleate, 2-(meth)acryloyloxyethyl phthalate, and 2-(meth)acryloyloxyethyl hexahydrophthalate; (meth)acrylates having a heterocyclic structure, such as tetrahydrofurfuryl (meth)acrylate and glycidyl (meth)acrylate; (meth)acrylates having a trialkoxysilyl group having 3 to 9 carbon atoms, such as 3-(meth)acryloxypropyltrimethoxysilane and 3-(meth)acryloxypropyltriethoxysilane; (meth)acrylates having a phosphate ester group, such as 2-(meth)acryloyloxyethyl acid phosphate; (meth)acrylates having an amino group, such as dimethylaminoethyl (meth)acrylate and diethylaminoethyl (meth)acrylate; and (meth)acrylates having an amide group, such as (meth)acrylamide, dimethyl (meth)acrylamide, and diethyl (meth)acrylamide. These compounds may be used in combination of two or more thereof. The polar group-containing (meth)acrylate (b) is preferably a (meth)acrylate having a hydroxyl group or a carboxy group, more preferably a (meth)acrylate having a hydroxyl group or a carboxy group, still more preferably a (meth)acrylate having a hydroxyl group, and particularly preferably an acrylate having a hydroxyl group. The total number of carbon atoms in the polar group-containing (meth)acrylate (b) is preferably 3 to 10, more preferably 3 to 9, and still more preferably 3 to 8.

Among the organic groups having a polar group, it is more preferable to use a polar group with large polarity. For example, a hydroxyl group, a carboxy group, an amino group, an amide group, a phosphate group, and a phosphate ester group have larger polarity than an alkoxyalkyl group, and are preferred polar groups.

By having a polar group with large polarity, the polymer can improve the affinity with the metal surface by the action of intermolecular forces such as van der Waals forces and hydrogen bonds, or the formation of chemical bonds such as covalent bonds and ionic bonds. As a result, the adhesiveness of the polymer to the metal surface is improved and the friction reducing performance can be enhanced.

Since the solubility in a base oil and the friction reducing performance can be made favorable, and the fuel saving property can be improved by reducing the viscosity of the lubricating oil composition, the contained amount of the constitutional unit derived from the component (b) is preferably 0.01% by mass or more and 20% by mass or less, more preferably 0.05% by mass or more and 15% by mass or less, still more preferably 0.1% by mass or more and 5% by mass or less, and particularly preferably 0.5% by mass or more and 3% by mass or less with respect to the total mass of the polymer.

It is preferable that, since the friction reducing performance can be made favorable, and the fuel saving property can be improved by reducing the viscosity of the lubricating oil composition, the polymer further contains, as a constitutional unit, an alkyl (meth)acrylate (c) having an alkyl group having 1 to 10 carbon atoms (hereinafter, also referred to as a "component (c) ").

Examples of the component (c) include (meth)acrylates having a linear alkyl group, such as methyl (meth)acrylate, ethyl (meth)acrylate, n-propyl (meth)acrylate, n-butyl (meth)acrylate, n-pentyl (meth)acrylate, n-hexyl (meth)acrylate, n-heptyl (meth)acrylate, n-octyl (meth)acrylate, and n-nonyl (meth)acrylate; (meth)acrylates having a branched alkyl group, such as i-propyl (meth)acrylate, i-butyl (meth)acrylate, t-butyl (meth)acrylate, i-nonyl (meth)acrylate, n-decyl (meth)acrylate, i-decyl (meth)acrylate, and 2-ethylhexyl (meth)acrylate; and (meth)acrylates having a cyclic alkyl group, such as cyclopentyl (meth)acrylate, cyclohexyl (meth)acrylate, dicyclopentanyl (meth)acrylate, isobornyl (meth)acrylate, and 4-t-butylcyclohexyl (meth)acrylate. These (meth)acrylate compounds may be used in combination of two or more thereof.

From the viewpoint of an excellent friction reducing effect, an alkyl (meth)acrylate having 1 to 4 carbon atoms is preferable, an alkyl acrylate having 1 to 4 carbon atoms is more preferable, and n-butyl acrylate is still more preferable.

From the viewpoint of an excellent friction reducing effect, it is preferable that the constitutional unit derived from the component (c) is contained in the main chain polymer structure.

Since the solubility in a base oil and the friction reducing performance can be made favorable, and the fuel saving property can be improved by reducing the viscosity of the lubricating oil composition, the contained amount of the constitutional unit derived from the component (c) is preferably 20% by mass or more and 95% by mass or less, more preferably 30% by mass or more and 90% by mass or less, and still more preferably 45% by mass or more and 80% by mass or less with respect to the total mass of the polymer.

Since the friction reducing performance can be made favorable, the total amount of the constitutional units derived from the components (a) to (c) is preferably 70% by mass or more, more preferably 80% by mass or more, and still more preferably 90% by mass or more with respect to the total mass of the polymer. The total amount of the constitutional units derived from the components (a) to (c) does not exceed 100% by mass with respect to the total mass of the polymer.

The polymer may contain a constitutional unit derived from another radical polymerizable vinyl-based compound (d) (hereinafter, also referred to as a "component (d)") other than the components (a) to (c).

Examples of the component (d) include styrene, α-methylstyrene, p-t-butylstyrene, vinyl toluene, vinyl acetate, and (meth)acrylate other than the components (a) to (c). Examples of the other (meth)acrylate include (meth)acrylates having an aromatic ring structure, such as phenyl (meth)acrylate, benzyl (meth)acrylate, phenoxyethyl (meth)acrylate, phenoxydiethylene glycol (meth)acrylate, phenoxy polyethylene glycol (meth)acrylate, nonyl phenoxy polyethylene glycol (meth)acrylate, phenoxy polypropylene glycol (meth)acrylate, phenylphenyl (meth)acrylate, phenylphenoxyethyl (meth)acrylate, phenoxybenzyl (meth)acrylate, phenylbenzyl (meth)acrylate, naphthyl (meth)acrylate, and (1-naphthyl)methyl (meth)acrylate; alkoxy (meth)acrylates such as methoxyethyl (meth)acrylate, ethoxyethyl (meth)acrylate, and butoxyethyl (meth)acrylate; and trifluoroethyl (meth)acrylate and heptadecafluorodecyl (meth)acrylate. These (meth)acrylate compounds may be used in combination of two or more thereof.

The polymer may contain, as constitutional units, the constitutional units derived from the components (a) to (d) in any of a main chain polymer structure or a side chain polymer structure.

The polymer may contain a constitutional unit derived from a vinyl-based radical polymerizable monomer (m1) (hereinafter, also referred to as a "component (m1)") and a constitutional unit derived from a macromonomer (M) (hereinafter, also referred to as a "component (M)"). The component (M) contains a constitutional unit derived from a monomer (m2) having a vinyl-based radical polymerizable group.

Examples of the component (m1) include styrene, vinyl acetate, and a (meth)acrylate compound. Examples of the (meth)acrylate compound include (meth)acrylates having a linear alkyl group, such as methyl (meth)acrylate, ethyl (meth)acrylate, n-propyl (meth)acrylate, n-butyl (meth)acrylate, n-pentyl (meth)acrylate, n-hexyl (meth)acrylate, n-heptyl (meth)acrylate, n-octyl (meth)acrylate, n-nonyl (meth)acrylate, n-decyl (meth)acrylate, n-undecyl (meth)acrylate, n-dodecyl (meth)acrylate, n-tridecyl (meth)acrylate, n-tetradecyl (meth)acrylate, n-cetyl (meth)acrylate, n-stearyl (meth)acrylate, and n-behenyl (meth)acrylate; (meth)acrylates having a branched alkyl group, such as i-propyl (meth)acrylate, i-butyl (meth)acrylate, t-butyl (meth)acrylate, s-butyl (meth)acrylate, isoamyl (meth)acrylate, 2-ethylhexyl (meth)acrylate, i-nonyl (meth)acrylate, i-decyl (meth)acrylate, 3-i-propylheptyl (meth)acrylate, i-undecyl (meth)acrylate, 2-t-butylheptyl (meth)acrylate, i-dodecyl (meth)acrylate, i-tridecyl (meth)acrylate, i-tetradecyl (meth)acrylate, and i-behenyl (meth)acrylate; (meth)acrylates having a cyclic alkyl group, such as cyclopentyl (meth)acrylate, cyclohexyl (meth)acrylate, isobornyl (meth)acrylate, dicyclopentenyl (meth)acrylate, dicyclopentenoxyethyl (meth)acrylate, dicyclopentanyl (meth)acrylate, and adamantyl (meth)acrylate; (meth)acrylates having a hydroxyl group, such as 2-hydroxyethyl (meth)acrylate, 2-hydroxypropyl (meth)acrylate, 2-hydroxybutyl (meth)acrylate, 4-hydroxybutyl (meth)acrylate, 6-hydroxyhexyl (meth)acrylate, glycerin mono(meth)acrylate, ethylene glycol mono(meth)acrylate, and propylene glycol mono(meth)acrylate; (meth)acrylates containing a carboxy group, such as (meth)acrylic acid, 2-(meth)acryloyloxyethyl succinate, 2-(meth)acryloyloxyethyl maleate, 2-(meth)acryloyloxyethyl phthalate, and 2-(meth)acryloyloxyethyl hexahydrophthalate; (meth)acrylates having an aromatic ring structure, such as phenyl (meth)acrylate, benzyl (meth)acrylate, phenoxyethyl (meth)acrylate, phenoxydiethylene glycol (meth)acrylate, phenoxy polyethylene glycol (meth)acrylate, nonyl phenoxy polyethylene glycol (meth)acrylate, phenoxy polypropylene glycol (meth)acrylate, phenylphenyl (meth)acrylate, phenylphenoxyethyl (meth)acrylate, phenoxybenzyl (meth)acrylate, phenylbenzyl (meth)acrylate, naphthyl (meth)acrylate, and (1-naphthyl)methyl (meth)acrylate; (meth)acrylates having a heterocyclic structure, such as tetrahydrofurfuryl (meth)acrylate, glycidyl (meth)acrylate, and (meth)acryloylmorpholine; alkoxy (meth)acrylates such as methoxyethyl (meth)acrylate, ethoxyethyl (meth)acrylate, and butoxyethyl (meth)acrylate; and allyl (meth)acrylate, dicyclopentenyl (meth)acrylate, dicyclopentenyloxyethyl (meth)acrylate, 3-(meth)acryloxypropyltrimethoxysilane, 3-(meth)acryloxypropyltriethoxysilane, 2-(meth)acryloyloxyethyl acid phosphate, trifluoroethyl (meth)acrylate, heptadecafluorodecyl (meth)acrylate, dimethylaminoethyl (meth)acrylate, diethylaminoethyl (meth)acrylate, and (meth)acrylamide. These compounds may be used in combination of two or more thereof.

From the viewpoint of increasing the friction reducing effect, it is preferable that the component (b) and the component (c) are contained as the component (m1).

The component (M) is a compound which contains two or more constitutional units derived from a monomer (m2) having a vinyl-based radical polymerizable group (hereinafter, also referred to as a "component (m2)") and has a radical polymerizable group at a terminal, and contains the component (a) as the component (m2). Examples of the component (m2) other than the component (a) include the compounds exemplified as the component (m1) above.

From the viewpoint of increasing the solubility of the polymer in a base oil, the constitutional unit derived from the component (a) is contained in an amount of preferably 50% by mass or more, more preferably 60% by mass or more, still more preferably 70% by mass or more, and particularly preferably 80% by mass or more with respect to the total mass of the component (M). The constitutional unit derived from the component (a) may be 100% by mass or is preferably less than 100% by mass with respect to the total mass of the component (M).

From the viewpoint of increasing the solubility of the polymer in a base oil, the constitutional unit derived from the component (c) is contained in an amount of preferably more than 0% by mass and 20% by mass or less, more preferably 0.1% to 15% by mass, still more preferably 0.2% to 10% by mass, and particularly preferably 0.5% to 5% by mass with respect to the total mass of the component (M).

From the viewpoint of increasing the solubility of the polymer in a base oil, the ratio represented by [the contained amount of the constitutional unit derived from the component (c)]/[the contained amount of the constitutional unit derived from the component (a)] is preferably 0.001 to 3.5, more preferably 0.002 to 3.0, and still more preferably 0.005 to 2.6.

Furthermore, from the viewpoint of radical polymerizability, the component (M) preferably has a structure represented by Formula (2).

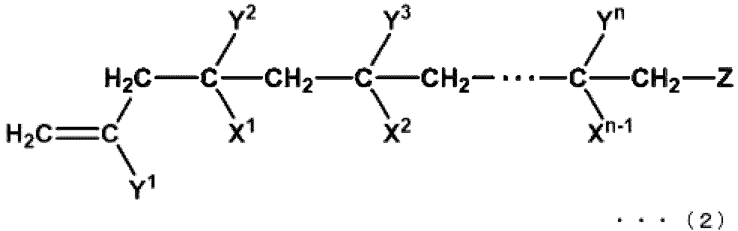

(In the formula, X¹ to Xⁿ⁻¹ each independently represent a hydrogen atom, a methyl group, or CH₂OH, and Y¹ to Yⁿ each independently represent a substituent other than X¹ to Xⁿ⁻¹ which is bonded to a vinyl group of the component (m2) that is a monomeric constitutional unit. Z represents a terminal group, and n represents an integer of 2 to 10000.)

X¹ to Xⁿ⁻¹ and Y¹ to Yⁿ are each independently a substituent bonded to the vinyl group of the component (m2). Y¹ to Yⁿ each represent, for example, OR¹, a halogen atom, COR², COOR³, CN, CONR⁴R⁵, NHCOR⁶, or R⁷, and R¹ to R⁷ each independently represent a hydrogen atom, an alkyl group, an aryl group, a heteroaryl group, or the like.

The terminal group Z includes a hydrogen atom and a group derived from a radical polymerization initiator, similarly to a terminal group of a polymer obtained by known radical polymerization.

In addition, from the viewpoint of increasing the solubility of the polymer in a base oil and the viewpoint of increasing the friction reducing effect, the contained amount of the constitutional unit derived from the component (M) is preferably 1% to 70% by mass, more preferably 2% to 60% by mass, and still more preferably 5% to 50% by mass with respect to the total mass of the polymer.

Since the solubility in a base oil and the friction reducing performance can be made favorable, and the fuel saving property can be improved by reducing the viscosity of the lubricating oil composition, the mass average molecular weight (Mw) of the macromonomer (M) measured by gel permeation chromatography is preferably 2000 to 100000, more preferably 3000 to 80000, still more preferably 4000 to 50000, and particularly preferably 5000 to 30000.

Since the solubility in a base oil and the friction reducing performance can be made favorable, and the fuel saving property can be improved by reducing the viscosity of the lubricating oil composition, the number-average molecular weight (Mn) of the macromonomer (M) measured by gel permeation chromatography (GPC) is preferably 500 to 30000, more preferably 1000 to 25000, still more preferably 2000 to 20000, and particularly preferably 3000 to 16000.

Since the solubility in a base oil and the friction reducing performance can be made favorable, and the fuel saving property can be improved by reducing the viscosity of the lubricating oil composition, the molecular weight distribution (Mw/Mn) of the macromonomer (M) measured by gel permeation chromatography is preferably 1.0 to 5.0, more preferably 1.3 to 3.0, and still more preferably 1.5 to 2.5.

The component (M) may be one produced by a known method or may be a commercially available product. Examples of the method for producing the component (M) include a production method using a cobalt chain transfer agent (United States Patent No. 4680352), a method using an α-substituted unsaturated compound such as α-bromomethylstyrene as a chain transfer agent (PCT International Publication No. WO88/04304), a method for chemically bonding polymerizable groups (Japanese Unexamined Patent Application, First Publication No. S60-133007 and United States Patent No. 5147952), and a method using thermal decomposition (Japanese Unexamined Patent Application, First Publication No. H11-240854).

The production method using a cobalt chain transfer agent is preferable in terms of having fewer production steps and using a catalyst with a high chain transfer constant. Since the cobalt chain transfer agent has a high chain transfer constant, a macromonomer with a controlled molecular weight can be obtained with the addition of a small amount of the agent.

A known cobalt complex can be used as the cobalt chain transfer agent. The amount of the cobalt chain transfer agent is preferably 0.00001 to 0.1 parts by mass, more preferably 0.00005 to 0.05 parts by mass, and particularly preferably 0.0001 to 0.02 parts by mass with respect to 100 parts by mass of the component (m2).

In addition, since the solubility in a base oil and the friction reducing performance can be made favorable, and the fuel saving property can be improved by reducing the viscosity of the lubricating oil composition, the mass average molecular weight (Mw) of the polymer contained in the friction reducer for a lubricating oil according to the embodiment of the present invention, which is measured by GPC, is preferably 10000 or more and 500000 or less, more preferably 15000 or more and 300000 or less, and still more preferably 20000 or more and 200000 or less.

In addition, since the solubility in a base oil and the friction reducing performance can be made favorable, and the fuel saving property can be improved by reducing the viscosity of the lubricating oil composition, the number-average molecular weight (Mn) of the polymer contained in the friction reducer for a lubricating oil according to the embodiment of the present invention, which is measured by gel permeation chromatography (GPC), is preferably 5000 or more and 100000 or less, more preferably 10000 or more and 80000 or less, and still more preferably 15000 or more and 50000 or less.

In addition, since the solubility in a base oil and the friction reducing performance can be made favorable, and the fuel saving property can be improved by reducing the viscosity of the lubricating oil composition, the molecular weight distribution (Mw/Mn) of the polymer contained in the friction reducer for a lubricating oil according to the embodiment of the present invention, which is measured by gel permeation chromatography (GPC), is preferably 1.0 or more and 15 or less, more preferably 2.0 or more and 10 or less, and still more preferably 3.0 or more and 8.0 or less.

An example of the method for producing the friction reducer for a lubricating oil according to the embodiment of the present invention will be shown.

The friction reducer for a lubricating oil according to the embodiment of the present invention can be produced by polymerizing a monomer mixture containing the alkyl (meth)acrylate (a) to (c) components, the other radical polymerizable vinyl-based compound (d) component, and the macromonomer (M) component in a base oil by a known method.

The base oil is not particularly limited and examples thereof include a base oil of API standard Group III such as YUBASE 3 manufactured by SK Lubricants Co., Ltd., a base oil of API standard Group III Plus such as YUBASE 4 manufactured by SK Lubricants Co., Ltd., and a base oil of API standard Group IV such as polyalphaolefin.

The polymerization may be carried out under known conditions, and it is preferable to use an α-methylstyrene dimer as a chain transfer agent since it is particularly excellent in the effect of suppressing heat generation during polymerization.

The friction reducer for a lubricating oil containing the polymer according to the embodiment of the present invention can be used as a friction reducer for a lubricating oil to be added to lubricating oils such as engine oils, drive system oils (gear oils, transmission oils), hydraulic oils, and metalworking oils, which are used in mobility such as automobiles and ships, and industrial machines, robots, and the like.

Examples of base oils for the engine oils, gear oils, hydraulic oils, and the like include mineral-based base oils refined from crude oil and chemically synthesized synthetic oils, examples of which include base oils of API standard Group III such as YUBASE 3 manufactured by SK Lubricants Co., Ltd., base oils of API standard Group III Plus such as YUBASE 4 manufactured by SK Lubricants Co., Ltd., and base oils of API standard Group IV such as polyalphaolefin.

The lubricating oil composition according to the embodiment of the present invention is prepared by blending the friction reducer for a lubricating oil according to the embodiment of the present invention with a base oil. The lubricating oil composition according to the embodiment of the present invention may contain other additives in addition to the friction reducer for a lubricating oil according to the embodiment of the present invention. Examples of the other additives include an antioxidant, a viscosity index improver, a pour-point depressant, a detergent-dispersant, a corrosion inhibitor, a rust inhibitor, an antifoaming agent, an emulsifier, a fungicide, and a demulsifier. In addition, as the friction reducer other than that of the present invention, oiliness improvers such as long-chain fatty acid esters and fatty acid amides, anti-wear agents such as phosphate esters and zinc dithiophosphates, extreme pressure agents such as organic sulfur compounds and organic halogen compounds, friction adjusters such as organic molybdenum compounds, and the like may be contained.

In addition, the lubricating oil composition according to the embodiment of the present invention may be a grease containing a thickener. Examples of the thickener include soap-based thickeners (such as lithium soap, calcium soap, sodium soap, and aluminum soap), inorganic thickeners (such as bentonite and silica gel), and organic thickeners (such as polyurea and polyurethane).

The contained amount of the friction reducer for a lubricating oil according to the embodiment of the present invention, which is contained in the lubricating oil composition, is preferably 0.01% to 30% by mass, more preferably 0.05% to 25% by mass, and still more preferably 0.1% to 20% by mass, in a case where the total mass of the lubricating oil composition is 100% by mass. In a case where the contained amount of the friction reducer for a lubricating oil is set to 0.01% by mass or more, the friction reducing effect of the lubricating oil composition is improved, and in a case where the contained amount of the friction reducer for a lubricating oil is set to 30% by mass or less, the kinematic viscosity of the lubricating oil composition at a low temperature is reduced, improving the fuel economy.

In a case where a base oil solution containing 2% by mass of the polymer is prepared, the friction coefficient measured at 40°C using an SRV5 tester (manufactured by Optimol Instruments Pruftechnik GmbH) is preferably 0.16 or less, more preferably 0.155 or less, and still more preferably 0.15 or less.

### Examples

Hereinafter, the present invention will be described in more detail with reference to Examples and Comparative Examples. In the Examples, "parts" represents "parts by mass". In addition, in Tables 1 to 6, the contained amount of the constitutional unit derived from each monomer is shown in % by mass. The contained amount of each constitutional unit was calculated from the mass of the monomer with respect to the total mass of the monomers used in the polymerization reaction. The evaluation was carried out by the following method.

### <Molecular weight of macromonomer (M)>

The measurement was carried out using GPC (HLC-8320, manufactured by Tosoh Corporation). After preparing a 0.2% by mass tetrahydrofuran solution of the macromonomer (M), 10 µl of the solution was injected into an apparatus equipped with columns manufactured by Tosoh Corporation (TSKgel SuperHZM-M (inner diameter: 4.6 mm, length: 15 cm), HZM-M (inner diameter: 4.6 mm, length: 15 cm), HZ-2000 (inner diameter: 4.6 mm, length: 15 cm), and TSK guard column Super HZ-L (inner diameter: 4.6 mm, length: 3.5 cm)), the measurement was carried out under the conditions of a flow rate: 0.35 ml/min, an eluent: tetrahydrofuran (stabilizer: BHT), and a column temperature: 40°C, and Mw, Mn, and Mw/Mn were calculated in terms of standard polystyrene.

### <Molecular weight of polymer>

The measurement was carried out using GPC (HLC-8320, manufactured by Tosoh Corporation). After preparing 0.2% by mass of a tetrahydrofuran solution of the polymer obtained in each of Examples, 10 µl of the solution was injected into an apparatus equipped with columns manufactured by Tosoh Corporation (two TSKgel SuperHZM-H (inner diameter: 6.0 mm, length: 15 cm) and TSK guard column Super HZ-H (inner diameter: 4.6 mm, length: 3.5 cm)), and the measurement was carried out under the conditions of a flow rate: 0.5 ml/min, an eluent: tetrahydrofuran (stabilizer: BHT), and a column temperature: 40°C, and Mw, Mn, and Mw/Mn were calculated in terms of standard polystyrene.

### <Friction coefficient at 40°C>

The obtained polymer, YUBASE 4, and molybdenum dialkyldithiocarbamate (MoDTC) were mixed for 10 minutes while heating to 65°C in accordance with the formulations shown in Tables 2 to 6 to prepare a lubricating oil composition, and the friction coefficient at 40°C was measured using an SRV5 tester (manufactured by Optimol Instruments Pruftechnik GmbH). The measurement conditions were as follows and the friction coefficient after 30 minutes from the start of the measurement was evaluated.
· Test method: ball-on-disk (diameter of ball: 10 mm, material for ball and disk: SUJ2)
· Test mode: reciprocation (50 Hz, stroke: 1 mm)
· Load: 200 N

### [Production Example 1]

### (Synthesis of Co complex (cobalt chain transfer agent))

In a synthesis apparatus equipped with a stirrer, in a nitrogen atmosphere, 2.00 g (8.03 mmol) of cobalt (II) acetate tetrahydrate (Wako special grade, manufactured by FUJIFILM Wako Pure Chemical Corporation), 3.86 g (16.1 mmol) of diphenylglyoxime (EP grade, manufactured by Tokyo Chemical Industry Co., Ltd.), and 100 ml of diethyl ether that had been deoxygenated in advance by nitrogen bubbling were placed and stirred at 25°C for 2 hours.

Next, 20 ml of a boron trifluoride diethyl ether complex (EP grade, manufactured by Tokyo Chemical Industry Co., Ltd.) was added thereto, followed by further stirring for 6 hours. The obtained product was filtered and the solid was washed with diethyl ether and dried at 100 MPa or less for 12 hours at 20°C to obtain 5.02 g (7.93 mmol, yield: 99% by mass) of a Co complex as a dark brown solid.

### [Production Example 2]

### (Synthesis of macromonomer M1)

58 parts of YUBASE 4, 98 parts of Acrylic Ester SL (trade name: Acrylic Ester SL, manufactured by Mitsubishi Chemical Corporation, a mixture of alkyl methacrylate having an alkyl group having 12 carbon atoms and alkyl methacrylate having an alkyl group having 13 carbon atoms), 2 parts of methyl methacrylate (MMA) (trade name: Acrylic Ester M, manufactured by Mitsubishi Chemical Corporation), and 0.005 parts of the Co complex produced in Production Example 1 were added to a reaction container equipped with a stirrer, a cooling tube, and a thermometer, the liquid temperature was raised to 40°C, and nitrogen was bubbled through the mixture for 2 hours while stirring to remove dissolved oxygen. A mixed liquid consisting of YUBASE 4 (2 parts) and 0.1 parts of t-butyl peroxy-2-ethylhexanoate (trade name: LUPEROX 26, manufactured by ARKEMA Yoshitomi, Ltd.) as a polymerization initiator was added thereto, the liquid temperature was raised to 90°C, followed by stirring for 2.5 hours, and then a mixed liquid consisting of YUBASE 4 (10 parts) and LUPEROX 26 (0.7 parts) was added dropwise thereto over 1 hour. After the dropwise addition, the temperature was raised to 105°C and maintained at that temperature for 1.5 hours, after which 20 parts of YUBASE 4 was added thereto, and the mixture was cooled to obtain a YUBASE 4 solution containing 52.6% by mass of the macromonomer M1. The results of GPC of the obtained macromonomer M1 are shown in Table 1.

### [Production Example 3]

### (Synthesis of macromonomer M2)

58 parts of YUBASE 4, 98 parts of Acrylic Ester SL, 2 parts of MMA, and 0.005 parts of the Co complex produced in Production Example 1 were added to a reaction container equipped with a stirrer, a cooling tube, and a thermometer, the liquid temperature was raised to 40°C, and nitrogen was bubbled through the mixture for 2 hours while stirring to remove dissolved oxygen. A mixed liquid consisting of YUBASE 4 (2 parts) and 0.1 parts of t-amyl peroxy-2-ethylhexanoate (trade name: LUPEROX 575, manufactured by ARKEMA Yoshitomi, Ltd.) as a polymerization initiator was added thereto, the liquid temperature was raised to 90°C, followed by stirring for 2.5 hours, and then a mixed liquid consisting of YUBASE 4 (10 parts) and LUPEROX 26 (0.7 parts) was added dropwise thereto over 1 hour. After the dropwise addition, the temperature was raised to 105°C and maintained at that temperature for 1.5 hours, after which 20 parts of YUBASE 4 was added thereto, and the mixture was cooled to obtain a YUBASE 4 solution containing 52.6% by mass of the macromonomer M2. The results of GPC of the obtained macromonomer M2 are shown in Table 1.

### [Production Example 4]

### (Synthesis of macromonomer M3)

58 parts of YUBASE 4, 98 parts of Acrylic Ester SL, 2 parts of MMA, and 0.0075 parts of the Co complex produced in Production Example 1 were added to a reaction container equipped with a stirrer, a cooling tube, and a thermometer, the liquid temperature was raised to 40°C, and nitrogen was bubbled through the mixture for 2 hours while stirring to remove dissolved oxygen. A mixed liquid consisting of YUBASE 4 (2 parts) and 0.1 parts of 1,1,3,3-tetramethylbutyl peroxy-2-ethylhexanoate (trade name: PEROCTA O, manufactured by NOF Corporation) as a polymerization initiator was added thereto, the liquid temperature was raised to 83°C, followed by stirring for 2.5 hours, and then a mixed liquid consisting of YUBASE 4 (10 parts) and PEROCTA O (0.7 parts) was added dropwise thereto over 1 hour. After the dropwise addition, the temperature was raised to 95°C and maintained at that temperature for 2 hours, after which 20 parts of YUBASE 4 was added thereto, and the mixture was cooled to obtain a YUBASE 4 solution containing 52.6% by mass of the macromonomer M3. The results of GPC of the obtained macromonomer M3 are shown in Table 1.

### [Production Example 5]

### (Synthesis of macromonomer M4)

58 parts of YUBASE 4, 2 parts of methyl methacrylate (MMA) (trade name: Acrylic Ester M, manufactured by Mitsubishi Chemical Corporation), 98 parts of stearyl methacrylate (trade name: Light Ester S, manufactured by Kyoeisha Chemical Co., Ltd.), and 0.005 parts of the Co complex produced in Production Example 1 were added to a reaction container equipped with a stirrer, a cooling tube, and a thermometer, the liquid temperature was raised to 40°C, and nitrogen was bubbled through the mixture for 2 hours while stirring to remove dissolved oxygen. A mixed liquid consisting of YUBASE 4 (2 parts) and 0.2 parts of t-butyl peroxy-2-ethylhexanoate (trade name: LUPEROX 26, manufactured by ARKEMA Yoshitomi, Ltd.) as a polymerization initiator was added thereto, the liquid temperature was raised to 90°C, followed by stirring for 2.5 hours, and then a mixed liquid consisting of YUBASE 4 (10 parts) and LUPEROX 26 (0.7 parts) was added dropwise thereto over 1 hour. After the dropwise addition, the temperature was raised to 105°C and maintained at that temperature for 1.5 hours, after which 20 parts of YUBASE 4 was added thereto, and the mixture was cooled to obtain a YUBASE 4 solution containing 52.6% by mass of the macromonomer M4. The results of GPC of the obtained macromonomer M4 are shown in Table 1.

### [Production Example 6]

### (Synthesis of macromonomer M5)

58 parts of YUBASE 4, 100 parts of 2-ethylhexyl methacrylate, and 0.003 parts of the Co complex produced in Production Example 1 were added to a reaction container equipped with a stirrer, a cooling tube, and a thermometer, the liquid temperature was raised to 40°C, and nitrogen was bubbled through the mixture for 2 hours while stirring to remove dissolved oxygen. A mixed liquid consisting of YUBASE 4 (2 parts) and 0.1 parts of t-amyl peroxy-2-ethylhexanoate (trade name: LUPEROX 575, manufactured by ARKEMA Yoshitomi, Ltd.) as a polymerization initiator was added thereto, the liquid temperature was raised to 90°C, followed by stirring for 2.5 hours, and then a mixed liquid consisting of YUBASE 4 (10 parts) and LUPEROX 575 (0.7 parts) was added dropwise thereto over 1 hour. After the dropwise addition, the temperature was raised to 105°C and maintained at that temperature for 1.5 hours, after which 20 parts of YUBASE 4 was added thereto, and the mixture was cooled to obtain a YUBASE 4 solution containing 52.6% by mass of the macromonomer M5. The results of GPC of the obtained macromonomer M5 are shown in Table 1.

### <Example 1>

50 parts of YUBASE 4, 47.6 parts of the YUBASE 4 solution of the macromonomer M1 obtained in Production Example 2, 56 parts of n-butyl acrylate (trade name: nBA, manufactured by Mitsubishi Chemical Corporation), 18 parts of lauryl acrylate (trade name: LA, manufactured by Osaka Organic Chemical Industry Ltd.), 1 part of 4-hydroxybutyl acrylate (trade name: 4HBA, manufactured by Mitsubishi Chemical Corporation), 0.03 parts of t-butyl peroxy-2-ethylhexanoate (trade name: PERBUTYL O, manufactured by NOF Corporation) as a polymerization initiator, and 0.3 parts of α-methylstyrene dimer (trade name: NOFMER MSD, manufactured by NOF Corporation) as a chain transfer agent were added to a reaction container equipped with a stirrer, a cooling tube, and a thermometer, and nitrogen was bubbled through the mixture while stirring to remove dissolved oxygen. The liquid temperature was raised to 85°C and maintained at that temperature for 3.5 hours, after which a mixed liquid consisting of YUBASE 4 (42 parts) and PERBUTYL O (0.015 parts) was added dropwise thereto over 2 hours. Further, after the temperature was maintained at 85°C for 1 hour, a mixed liquid consisting of YUBASE 4 (30 parts) and PERBUTYL O (0.5 parts) was added dropwise thereto over 1 hour. Thereafter, the temperature was raised to 110°C and maintained at that temperature for 1 hour, after which 41.1 parts of YUBASE 4 was added thereto, and the mixture was cooled to obtain a YUBASE 4 solution containing 35% by mass of the polymer. The evaluation results of the lubricating oil composition containing the obtained friction reducer for a lubricating oil are shown in Table 2. In Tables 2 to 6, the polymer formulations also include the constitutional units in the macromonomer (M).

### <Example 2>

30 parts of YUBASE 4 and 47.6 parts of the YUBASE 4 solution of the macromonomer M1 obtained in Production Example 2 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (55 parts), LA (17 parts), 4HBA (3 parts), LUPEROX 575 (0.1 parts), and NOFMER MSD (0.9 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, after which YUBASE 4 (58.1 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 2.

### <Example 3>

In a case of preparing a lubricating oil composition using the friction reducer for a lubricating oil obtained in Example 2, MoDTC was added at the ratio shown in Table 2 and used for evaluation. The evaluation results of the obtained lubricating oil composition are shown in Table 2.

### <Example 4>

50 parts of YUBASE 4, 47.6 parts of the YUBASE 4 solution of the macromonomer M2 obtained in Production Example 3, 56 parts of nBA, 18 parts of LA, 1 part of 4HBA, 0.03 parts of PERBUTYL O, and 0.5 parts of NOFMER MSD were added to a reaction container equipped with a stirrer, a cooling tube, and a thermometer, and nitrogen was bubbled through the mixture while stirring to remove dissolved oxygen. The liquid temperature was raised to 85°C and maintained at that temperature for 3.5 hours, after which a mixed liquid consisting of YUBASE 4 (42 parts) and PERBUTYL O (0.015 parts) was added dropwise thereto over 2 hours. Further, after the temperature was maintained at 85°C for 1 hour, a mixed liquid consisting of YUBASE 4 (30 parts) and PERBUTYL O (0.5 parts) was added dropwise thereto over 1 hour. Thereafter, the temperature was raised to 110°C and maintained at that temperature for 1 hour, after which 41.1 parts of YUBASE 4 was added thereto, and the mixture was cooled to obtain a YUBASE 4 solution containing 35% by mass of the polymer. The evaluation results of the lubricating oil composition containing the obtained friction reducer for a lubricating oil are shown in Table 2.

### <Example 5>

30 parts of YUBASE 4 and 47.6 parts of the YUBASE 4 solution of the macromonomer M2 obtained in Production Example 3 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (55 parts), LA (17 parts), 4HBA (3 parts), LUPEROX 575 (0.1 parts), and NOFMER MSD (0.9 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, after which YUBASE 4 (58.1 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 2.

### <Example 6>

30 parts of YUBASE 4 and 47.6 parts of the YUBASE 4 solution of the macromonomer M3 obtained in Production Example 4 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (55 parts), LA (17 parts), 4HBA (3 parts), LUPEROX 575 (0.1 parts), and NOFMER MSD (0.9 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, after which YUBASE 4 (58.1 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 2.

### <Example 7>

30 parts of YUBASE 4 and 47.6 parts of the YUBASE 4 solution of the macromonomer M1 obtained in Production Example 2 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (44 parts), LA (30 parts), 4HBA (1 part), LUPEROX 575 (0.1 parts), and NOFMER MSD (0.3 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, after which YUBASE 4 (58.1 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 2.

### <Example 8>

30 parts of YUBASE 4 and 47.6 parts of the YUBASE 4 solution of the macromonomer M1 obtained in Production Example 2 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), LA (65 parts), 4HBA (10 parts), LUPEROX 575 (0.1 parts), and NOFMER MSD (0.4 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, after which YUBASE 4 (58.1 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 2.

### <Example 9>

30 parts of YUBASE 4 and 9.5 parts of the YUBASE 4 solution of the macromonomer M2 obtained in Production Example 3 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (69 parts), LA (22 parts), 4HBA (4 parts), LUPEROX 575 (0.1 parts), and NOFMER MSD (0.9 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, after which YUBASE 4 (76.2 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 2.

### <Example 10>

30 parts of YUBASE 4 and 95.1 parts of the YUBASE 4 solution of the macromonomer M2 obtained in Production Example 3 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (48 parts), 4HBA (2 parts), LUPEROX 575 (0.1 parts), and NOFMER MSD (0.9 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, after which YUBASE 4 (35.6 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 2.

### <Example 11>

30 parts of YUBASE 4 and 47.6 parts of the YUBASE 4 solution of the macromonomer M1 obtained in Production Example 2 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (56 parts), LA (18 parts), hydroxyethyl acrylate (trade name: HEA, manufactured by Osaka Organic Chemical Industry Ltd.) (1 part), LUPEROX 575 (0.1 parts), and NOFMER MSD (0.5 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, after which YUBASE 4 (58.1 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 3.

### <Example 12>

30 parts of YUBASE 4 and 47.6 parts of the YUBASE 4 solution of the macromonomer M1 obtained in Production Example 2 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (55 parts), LA (17 parts), HEA (3 parts), LUPEROX 575 (0.1 parts), and NOFMER MSD (0.7 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, after which YUBASE 4 (58.1 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 3.

### <Example 13>

30 parts of YUBASE 4 and 47.6 parts of the YUBASE 4 solution of the macromonomer M2 obtained in Production Example 3 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (55 parts), LA (17 parts), HEA (3 parts), LUPEROX 575 (0.1 parts), and NOFMER MSD (0.7 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, after which YUBASE 4 (58.1 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 3.

### <Example 14>

30 parts of YUBASE 4 and 47.6 parts of the YUBASE 4 solution of the macromonomer M1 obtained in Production Example 2 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (56 parts), LA (18 parts), glycerin monomethacrylate (trade name: BLEMMER GLM, manufactured by NOF Corporation) (1 part), LUPEROX 575 (0.1 parts), and NOFMER MSD (0.4 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, after which YUBASE 4 (58.1 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 3.

### <Example 15>

30 parts of YUBASE 4 and 47.6 parts of the YUBASE 4 solution of the macromonomer M1 obtained in Production Example 2 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (55 parts), LA (18 parts), BLEMMER GLM (2 parts), LUPEROX 575 (0.1 parts), and NOFMER MSD (0.6 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, after which YUBASE 4 (58.1 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 3.

### <Example 16>

30 parts of YUBASE 4 and 47.6 parts of the YUBASE 4 solution of the macromonomer M2 obtained in Production Example 3 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (55 parts), LA (18 parts), BLEMMER GLM (2 parts), LUPEROX 575 (0.1 parts), and NOFMER MSD (0.6 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, after which YUBASE 4 (58.1 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 3.

### <Example 17>

30 parts of YUBASE 4 and 47.6 parts of the YUBASE 4 solution of the macromonomer M1 obtained in Production Example 2 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (56 parts), LA (18 parts), acrylic acid (trade name: AA, manufactured by Mitsubishi Chemical Corporation) (1 part), LUPEROX 575 (0.1 parts), and NOFMER MSD (0.6 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, after which YUBASE 4 (58.1 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 3.

### <Example 18>

30 parts of YUBASE 4 and 47.6 parts of the YUBASE 4 solution of the macromonomer M1 obtained in Production Example 2 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (55 parts), LA (17 parts), AA (3 parts), LUPEROX 575 (0.1 parts), and NOFMER MSD (0.9 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, after which YUBASE 4 (58.1 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 3.

### <Example 19>

30 parts of YUBASE 4 and 47.6 parts of the YUBASE 4 solution of the macromonomer M2 obtained in Production Example 3 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (55 parts), LA (17 parts), AA (3 parts), LUPEROX 575 (0.1 parts), and NOFMER MSD (0.9 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, after which YUBASE 4 (58.1 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 3.

### <Example 20>

30 parts of YUBASE 4 and 47.6 parts of the YUBASE 4 solution of the macromonomer M1 obtained in Production Example 2 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), LA (65 parts), AA (10 parts), LUPEROX 575 (0.1 parts), and NOFMER MSD (0.9 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, after which YUBASE 4 (58.1 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 4.

### <Example 21>

30 parts of YUBASE 4 and 47.6 parts of the YUBASE 4 solution of the macromonomer M1 obtained in Production Example 2 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (56 parts), LA (18 parts), diethylacrylamide (trade name: DEAA, manufactured by KJ Chemicals Corporation) (1 part), LUPEROX 575 (0.4 parts), and NOFMER MSD (0.9 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 95°C and maintained at that temperature for 2 hours, after which YUBASE 4 (58.1 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 4.

### <Example 22>

30 parts of YUBASE 4 and 47.6 parts of the YUBASE 4 solution of the macromonomer M1 obtained in Production Example 2 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (54 parts), LA (16 parts), DEAA (5 parts), LUPEROX 575 (0.4 parts), and NOFMER MSD (0.9 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 95°C and maintained at that temperature for 2 hours, after which YUBASE 4 (58.1 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 4.

### <Example 23>

30 parts of YUBASE 4 and 47.6 parts of the YUBASE 4 solution of the macromonomer M2 obtained in Production Example 3 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (54 parts), LA (16 parts), DEAA (5 parts), LUPEROX 575 (0.4 parts), and NOFMER MSD (0.9 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 95°C and maintained at that temperature for 2 hours, after which YUBASE 4 (58.1 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 4.

### <Example 24>

30 parts of YUBASE 4 and 47.6 parts of the YUBASE 4 solution of the macromonomer M1 obtained in Production Example 2 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (56 parts), LA (18 parts), polypropylene glycol monomethacrylate (trade name: BLEMMER PP-800, manufactured by NOF Corporation, average number of moles of propylene oxides added: 13, terminal: hydroxyl group) (1 part), LUPEROX 575 (0.4 parts), and NOFMER MSD (0.9 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 95°C and maintained at that temperature for 2 hours, after which YUBASE 4 (58.1 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 4.

### <Example 25>

30 parts of YUBASE 4 and 47.6 parts of the YUBASE 4 solution of the macromonomer M1 obtained in Production Example 2 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (54 parts), LA (16 parts), BLEMMER PP-800 (5 parts), LUPEROX 575 (0.4 parts), and NOFMER MSD (0.9 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 95°C and maintained at that temperature for 2 hours, after which YUBASE 4 (58.1 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 4.

### <Example 26>

30 parts of YUBASE 4 and 47.6 parts of the YUBASE 4 solution of the macromonomer M2 obtained in Production Example 3 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (54 parts), LA (16 parts), BLEMMER PP-800 (5 parts), LUPEROX 575 (0.4 parts), and NOFMER MSD (0.9 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 95°C and maintained at that temperature for 2 hours, after which YUBASE 4 (58.1 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 4.

### <Example 27>

30 parts of YUBASE 4 and 47.6 parts of the YUBASE 4 solution of the macromonomer M1 obtained in Production Example 2 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (56 parts), LA (18 parts), 3-methacryloxypropyltrimethoxysilane (trade name: KBM 503, manufactured by Shin-Etsu Chemical Co., Ltd.) (1 part), LUPEROX 575 (0.1 parts), and NOFMER MSD (0.7 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, after which YUBASE 4 (58.1 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 4.

### <Example 28>

30 parts of YUBASE 4 and 47.6 parts of the YUBASE 4 solution of the macromonomer M1 obtained in Production Example 2 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (55 parts), LA (17 parts), 3-methacryloxypropyltrimethoxysilane (trade name: KBM 503, manufactured by Shin-Etsu Chemical Co., Ltd.) (3 parts), LUPEROX 575 (0.1 parts), and NOFMER MSD (0.7 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, after which YUBASE 4 (58.1 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 4.

### <Example 29>

30 parts of YUBASE 4 and 47.6 parts of the YUBASE 4 solution of the macromonomer M2 obtained in Production Example 3 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (56 parts), LA (18 parts), 4HBA (1 part), LUPEROX 575 (0.1 parts), and NOFMER MSD (1.5 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, after which YUBASE 4 (58.1 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 4.

### <Example 30>

30 parts of YUBASE 4 and 47.6 parts of the YUBASE 4 solution of the macromonomer M2 obtained in Production Example 3 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (55 parts), LA (17 parts), 4HBA (3 parts), LUPEROX 575 (0.1 parts), and NOFMER MSD (1.5 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, after which YUBASE 4 (58.1 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 5.

### <Example 31>

30 parts of YUBASE 4 and 47.6 parts of the YUBASE 4 solution of the macromonomer M2 obtained in Production Example 3 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (56 parts), LA (18 parts), HEA (1 part), LUPEROX 575 (0.1 parts), and NOFMER MSD (1.2 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, after which YUBASE 4 (58.1 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 5.

### <Example 32>

30 parts of YUBASE 4 and 47.6 parts of the YUBASE 4 solution of the macromonomer M2 obtained in Production Example 3 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (55 parts), LA (17 parts), HEA (3 parts), LUPEROX 575 (0.1 parts), and NOFMER MSD (1.5 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, after which YUBASE 4 (58.1 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 5.

### <Example 33>

30 parts of YUBASE 4 and 47.6 parts of the YUBASE 4 solution of the macromonomer M3 obtained in Production Example 4 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (56 parts), LA (18 parts), 4HBA (1 part), LUPEROX 575 (0.1 parts), and NOFMER MSD (1.5 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, after which YUBASE 4 (58.1 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 5.

### <Example 34>

30 parts of YUBASE 4 and 47.6 parts of the YUBASE 4 solution of the macromonomer M3 obtained in Production Example 4 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (55 parts), LA (17 parts), 4HBA (3 parts), LUPEROX 575 (0.1 parts), and NOFMER MSD (1.5 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, after which YUBASE 4 (58.1 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 5.

### <Example 35>

30 parts of YUBASE 4 and 47.6 parts of the YUBASE 4 solution of the macromonomer M3 obtained in Production Example 4 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (56 parts), LA (18 parts), HEA (1 part), LUPEROX 575 (0.1 parts), and NOFMER MSD (1.2 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, after which YUBASE 4 (58.1 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 5.

### <Example 36>

30 parts of YUBASE 4 and 47.6 parts of the YUBASE 4 solution of the macromonomer M3 obtained in Production Example 4 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (55 parts), LA (17 parts), HEA (3 parts), LUPEROX 575 (0.1 parts), and NOFMER MSD (1.5 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, after which YUBASE 4 (58.1 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 5.

### <Example 37>

30 parts of YUBASE 4 and 47.6 parts of the YUBASE 4 solution of the macromonomer M1 obtained in Production Example 2 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (55 parts), LA (17 parts), dimethylaminoethyl acrylate (trade name: ARON DA, manufactured by Toagosei Co., Ltd.) (3 parts), LUPEROX 575 (0.1 parts), and NOFMER MSD (0.5 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, after which YUBASE 4 (58.1 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 5.

### <Example 38>

30 parts of YUBASE 4 and 95.1 parts of the YUBASE 4 solution of the macromonomer M2 obtained in Production Example 3 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (49 parts), polyethylene glycol monoacrylate (trade name: AE-200, manufactured by NOF Corporation, number of moles of ethyleneoxy groups added: about 4.5) (1 part), LUPEROX 575 (0.1 parts), and NOFMER MSD (0.9 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, after which YUBASE 4 (35.6 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 5.

### <Example 39>

30 parts of YUBASE 4 and 47.6 parts of the YUBASE 4 solution of the macromonomer M1 obtained in Production Example 2 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (56 parts), LA (18 parts), polyethylene glycol monoacrylate (trade name: AE-400, manufactured by NOF Corporation, number of moles of ethyleneoxy groups added: about 10) (1 part), LUPEROX 575 (0.4 parts), and NOFMER MSD (0.9 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, after which YUBASE 4 (58.1 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 5.

### <Example 40>

30 parts of YUBASE 4 and 47.6 parts of the YUBASE 4 solution of the macromonomer M1 obtained in Production Example 2 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (56 parts), LA (18 parts), polypropylene glycol monoacrylate (trade name: AP-400, manufactured by NOF Corporation, number of moles of propyleneoxy groups added: about 6) (1 part), LUPEROX 575 (0.1 parts), and NOFMER MSD (0.5 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, after which YUBASE 4 (58.1 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 6.

### <Example 41>

30 parts of YUBASE 4 and 47.6 parts of the YUBASE 4 solution of the macromonomer M4 obtained in Production Example 5 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (56 parts), LA (18 parts), 4-hydroxybutyl acrylate (1 part), LUPEROX 575 (0.1 parts), and NOFMER MSD (0.5 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, after which YUBASE 4 (58.1 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 6.

### <Example 42>

30 parts of YUBASE 4 and 47.6 parts of the YUBASE 4 solution of the macromonomer M1 obtained in Production Example 2 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (55 parts), LA (17 parts), 4-hydroxybutyl acrylate (3 parts), LUPEROX 575 (3 parts), and NOFMER MSD (4 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, after which YUBASE 4 (58.1 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 6.

### <Example 43>

30 parts of YUBASE 4 and 47.6 parts of the YUBASE 4 solution of the macromonomer M2 obtained in Production Example 3 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (55 parts), LA (17 parts), 4-hydroxybutyl acrylate (3 parts), LUPEROX 575 (1 part), and NOFMER MSD (1.9 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, after which YUBASE 4 (58.1 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 6.

### <Example 44>

40 parts of YUBASE 4 and 47.6 parts of the YUBASE 4 solution of the macromonomer M1 obtained in Production Example 2 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (55 parts), LA (17 parts), 4-hydroxybutyl acrylate (3 parts), and LUPEROX 575 (0.1 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, after which YUBASE 4 (48.1 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 6.

### <Example 45>

30 parts of YUBASE 4 and 95.1 parts of the YUBASE 4 solution of the macromonomer M2 obtained in Production Example 3 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (47 parts), 4-hydroxybutyl acrylate (3 parts), LUPEROX 575 (0.1 parts), and NOFMER MSD (1.3 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, after which YUBASE 4 (35.6 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 6.

### <Example 46>

30 parts of YUBASE 4 and 133.1 parts of the YUBASE 4 solution of the macromonomer M2 obtained in Production Example 3 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (30 parts), nBA (27 parts), 4-hydroxybutyl acrylate (3 parts), LUPEROX 575 (1 part), and NOFMER MSD (0.9 parts) was added dropwise thereto over 4 hours. After the temperature was maintained at 85°C for 1 hour, a mixed liquid of YUBASE 4 (20 parts) and LUPEROX 575 (0.5 parts) was added dropwise thereto over 1.5 hours. The temperature was raised to 110°C and maintained at that temperature for 1 hour, after which YUBASE 4 (44.5 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 6.

### <Comparative Example 1>

50 parts of YUBASE 4, 47.6 parts of the YUBASE 4 solution of the macromonomer M1 obtained in Production Example 2, 56 parts of nBA, 19 parts of LA, 0.03 parts of PERBUTYL O, and 0.05 parts of NOFMER MSD were added to a reaction container equipped with a stirrer, a cooling tube, and a thermometer, and nitrogen was bubbled through the mixture while stirring to remove dissolved oxygen. The liquid temperature was raised to 85°C and maintained at that temperature for 3.5 hours, after which a mixed liquid consisting of YUBASE 4 (42 parts) and PERBUTYL O (0.015 parts) was added dropwise thereto over 2 hours. Further, after the temperature was maintained at 85°C for 1 hour, a mixed liquid consisting of YUBASE 4 (30 parts) and PERBUTYL O (0.5 parts) was added dropwise thereto over 1 hour. Thereafter, the temperature was raised to 110°C and maintained at that temperature for 1 hour, after which 41.1 parts of YUBASE 4 was added thereto, and the mixture was cooled to obtain a YUBASE 4 solution containing 35% by mass of the polymer. The evaluation results of the lubricating oil composition containing the obtained friction reducer for a lubricating oil are shown in Table 6.

### <Comparative Example 2>

72.6 parts of YUBASE 4, 44 parts of nBA, 30 parts of LA, 24.5 parts of Acrylic Ester SL, 0.5 parts of MMA, 1 part of 4HBA, 0.03 parts of PERBUTYL O, and 0.15 parts of NOFMER MSD were added to a reaction container equipped with a stirrer, a cooling tube, and a thermometer, and nitrogen was bubbled through the mixture while stirring to remove dissolved oxygen. The liquid temperature was raised to 85°C and maintained at that temperature for 3.5 hours, after which a mixed liquid consisting of YUBASE 4 (42 parts) and PERBUTYL O (0.015 parts) was added dropwise thereto over 2 hours. Further, after the temperature was maintained at 85°C for 1 hour, a mixed liquid consisting of YUBASE 4 (60 parts) and PEROCTA O (0.5 parts) was added dropwise thereto over 1 hour. Thereafter, the temperature was raised to 110°C and maintained at that temperature for 1 hour, after which 11.1 parts of YUBASE 4 was added thereto, and the mixture was cooled to obtain a YUBASE 4 solution containing 35% by mass of the polymer. The evaluation results of the lubricating oil composition containing the obtained friction reducer for a lubricating oil are shown in Table 6.

### <Comparative Example 3>

30 parts of YUBASE 4 and 47.6 parts of the YUBASE 4 solution of the macromonomer M1 obtained in Production Example 2 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (56 parts), LA (18 parts), 2-methoxyethyl acrylate (trade name: 2-MTA, manufactured by Osaka Organic Chemical Industry Ltd.) (1 part), LUPEROX 575 (1 part), and NOFMER MSD (0.5 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, after which YUBASE 4 (58.1 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 6.

### <Comparative Example 4>

30 parts of YUBASE 4 and 47.6 parts of the YUBASE 4 solution of the macromonomer M5 obtained in Production Example 6 were added to a reaction container equipped with a stirrer, a cooling tube, and a thermometer, and nitrogen was bubbled through the mixture while stirring to remove dissolved oxygen. The liquid temperature was raised to 85°C, and a mixed liquid consisting of YUBASE 4 (25 parts), nBA (56 parts), LA (18 parts), 4-hydroxybutyl acrylate (1 part), LUPEROX 575 (0.1 parts), and NOFMER MSD (0.5 parts) was added dropwise thereto over 4 hours. After the temperature was maintained at 85°C for 1 hour, a mixed liquid of YUBASE 4 (50 parts) and LUPEROX 575 (0.5 parts) was added dropwise thereto over 1.5 hours. The temperature was raised to 110°C and maintained at that temperature for 1 hour, after which YUBASE 4 (58.1 parts) was added thereto, and the mixture was cooled to obtain a YUBASE 4 solution containing 35% by mass of the polymer. The evaluation results of the lubricating oil composition containing the obtained friction reducer for a lubricating oil are shown in Table 6.

In Comparative Example 1, the polymer did not contain a constitutional unit derived from the component (b), so the friction coefficient was high. In addition, in Comparative Example 2, the polymer did not have a side chain polymer structure, so the friction coefficient was high. In Comparative Example 3, the polymer contained a constitutional unit having an alkoxyalkyl group as a polar group but did not contain a constitutional unit derived from the component (b), so the friction coefficient was high, similar to Comparative Example 1. In Comparative Example 4, the side chain polymer structure did not contain a constitutional unit derived from the component (a), so the friction coefficient was high.

**[Table 1]**

| | | | Production Example 2 | Production Example 3 | Production Example 4 | Production Example 5 | Production Example 6 |
|---|---|---|---|---|---|---|---|
| Macromonomer No. | | | M1 | M2 | M3 | M4 | MS |
| Formulation (% by mass) | Vinyl-based radical polymerizable monomer (m2) | SLMA | 98 | 98 | 98 | - | - |
| | | MMA | 2 | 2 | 2 | 2 | - |
| | | SMA | - | - | - | 98 | - |
| | | EHMA | - | - | - | - | 100 |
| | Total | | 100 | 100 | 100 | 100 | 100 |
| Evaluation | GPC | Mw | 22.000 | 11,000 | 5,600 | 10,700 | 14,600 |
| | | Mn | 9,700 | 5,500 | 3,300 | 5,500 | 7,800 |
| | | Mw/Mn | 2.3 | 2.0 | 1.7 | 1.9 | 1.9 |

**[Table 2]**

| | | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|---|
| Polymer | Macromonomer | Used macromonomer No. | | M1 | M1 | M1 | M2 | M2 | M3 | M1 | M1 | M2 | M2 |
| | | Macromonomer (M) | | 25 | 25 | 25 | 25 | 25 | 25 | 25 | 25 | 5 | 50 |
| | Polymer formulation (% by mass) | Alkyl (meth)acrylate (a) having 11 to 30 carbon atoms | LA | 16 | 17 | 17 | 18 | 17 | 17 | 30 | 65 | 22 | - |
| | | | SLMA | 24.5 | 24.5 | 24.5 | 24.5 | 24.5 | 24.5 | 24.5 | 24.5 | 4.9 | 49 |
| | | Polar group-containing (meth)acrylate | 4HBA | 1 | 3 | 3 | 1 | 3 | 3 | 1 | 10 | 4 | 2 |
| | | Alkyl | nBA | 56 | 55 | 55 | 56 | 55 | 55 | 44 | - | 69 | 48 |
| | | (meth)acrylate (c) having 1 to 10 carbon atoms | MMA | 0.5 | 0.5 | 0.5 | 0.5 | 0.5 | 0.5 | 0.5 | 0.5 | 0.1 | 1 |
| | | Total | | 100 | 100 | 100 | 100 | 100 | 100 | 100 | 100 | 100 | 100 |
| | Evaluation | Mw (× 10⁴) | | 28 | 20 | 20 | 10 | 18 | 12 | 16 | 18 | 28 | 6.2 |
| | | Mn (× 10⁴) | | 2.9 | 2.8 | 2.8 | 2.4 | 2.7 | 2.6 | 2.7 | 3.0 | 2.7 | 1.9 |
| | | Mw/Mn | | 9.7 | 7.1 | 7.1 | 4.2 | 6.7 | 4.6 | 5.9 | 6.0 | 10.4 | 3.3 |
| Lubricating oil composition | Formulation (% by mass) | Polymer | | 2 | 2 | 2 | 2 | 2 | 2 | 2 | 2 | 2 | 2 |
| | | MoDTC | | - | - | 0.5 | - | - | - | - | - | - | |
| | | YUBASE 4 | | 98 | 98 | 97.5 | 98 | 98 | 98 | 98 | 98 | 98 | 99 |
| | | Total | | 100 | 100 | 100 | 100 | 100 | 100 | 100 | 100 | 100 | 100 |
| | Evaluation | Friction coefficient at 40°C | | 0 123 | 0.122 | 0.112 | 0.121 | 0.120 | 0.122 | 0.156 | 0.136 | 0.119 | 0.119 |

**[Table 3]**

| | | | | Example 11 | Example 12 | Example 13 | Example 14 | Example 15 | Example 16 | Example 17 | Example 18 | Example 19 |
|---|---|---|---|---|---|---|---|---|---|---|---|---|
| | Macromonomer | Used macromonomer No. | | M1 | M1 | M2 | M1 | M1 | M2 | M1 | M1 | M2 |
| | | Macromonomer (M) | | 25 | 25 | 25 | 25 | 25 | 25 | 25 | 25 | 25 |
| | | Alkyl (meth)acrylate (a) having 11 to 30 carbon atoms | LA | 18 | 17 | 17 | 18 | 18 | 18 | 18 | 17 | 17 |
| | | | SLMA | 24.5 | 24.5 | 24.5 | 24.5 | 24.5 | 24.5 | 24.5 | 24.5 | 24.5 |
| | | Polar group-containing (meth)acrylate (b) | 4HBA | - | - | - | - | - | - | - | - | - |
| | Polymer formulation (% by mass) | | HEA | 1 | 3 | 3 | - | - | - | - | - | - |
| | | | GLM | - | - | - | 1 | 2 | 2 | - | - | - |
| | | | AA | | - | - | - | - | - | 1 | 3 | 3 |
| Polymer | | Alkyl (meth)acrylate (c) having 1 to 10 carbon atoms | nBA | 56 | 55 | 55 | 56 | 55 | 55 | 56 | 55 | 55 |
| | | | MMA | 0.5 | 0.5 | 0.5 | 0.5 | 0.5 | 0.5 | 0.5 | 0.5 | 0.5 |
| | | Total | | 100 | 100 | 100 | 100 | 100 | 100 | 100 | 100 | 100 |
| | Evaluation | Mw (× 10⁴) | | 19 | 19 | 15 | 15 | 11 | 8 | 13 | 16 | 12 |
| | | Mn (x 10⁴) | | 8.7 | 2.5 | 2.6 | 2.8 | 2.4 | 2.2 | 2.3 | 2.5 | 2.4 |
| | | Mw/Mn | | 7.0 | 7.6 | 5.8 | 5.4 | 4.6 | 3.6 | 5.7 | 6.4 | 5.0 |
| Lubricating oil composition | Formulation (% by mass) | Polymer | | 2 | 2 | 2 | 2 | 2 | 2 | 2 | 2 | 2 |
| | | MoDTC | | - | - | - | - | - | - | - | - | - |
| | | YUBASE 4 | | 98 | 98 | 98 | 98 | 98 | 98 | 98 | 98 | 98 |
| | | Total | | 100 | 100 | 100 | 100 | 100 | 100 | 100 | 100 | 100 |
| | Evaluation | Friction coefficient at 40°C | | 0.122 | 0.132 | 0.125 | 0.138 | 0.133 | 0.130 | 0.157 | 0.149 | 0.144 |

**[Table 4]**

| | | | | Example 20 | Example 21 | Example 22 | Example 23 | Example 24 | Example 25 | Example 26 | Example 27 | Example 28 | Example 29 |
|---|---|---|---|---|---|---|---|---|---|---|---|---|---|
| | Macromonomer | Used macromonomer No. | | M1 | M1 | M1 | M2 | M1 | M1 | M2 | M1 | M1 | M2 |
| | | Macromonomer (M) | | 25 | 25 | 25 | 25 | 25 | 25 | 25 | 25 | 25 | 25 |
| | | Alkyl (meth)acrylate (a) having 11 to 30 carbon atoms | LA | 65 | 18 | 16 | 16 | 18 | 16 | 16 | 18 | 17 | 18 |
| | | | SLMA | 24.5 | 24.5 | 24.5 | 24.5 | 24.5 | 24.5 | 24.5 | 24.5 | 24.5 | 24.5 |
| | | Polar group-containing (meth)acrylate (b) | 4HBA | - | - | - | - | - | - | - | - | - | 1 |
| | | | AA | 10 | - | - | - | - | - | - | - | - | - |
| Polymer | | | DEAA | - | 1 | 5 | 5 | - | - | - | - | - | - |
| | Polymer formulation (% by mass) | | PP800 | - | - | - | - | 1 | 5 | 5 | - | - | - |
| | | | KBM503 | - | - | - | - | - | - | - | I | 3 | - |
| | | Alkyl (meth)acrylate (c) having 1 to 10 carbon atoms | nBA | - | 56 | 54 | 54 | 56 | 54 | 54 | 56 | 55 | 56 |
| | | | MMA | 0.5 | 0.5 | 0.5 | 0.5 | 0.5 | 0.5 | 0.5 | 0.5 | 0.5 | 0.5 |
| | | Total | | 100 | 100 | 100 | 100 | 100 | 100 | 100 | 100 | 100 | 100 |
| | Evaluation | Mw (x 10⁴) | | 12 | 12 | 13 | 9.0 | 17 | 45 | 40 | 13 | 12 | 6.5 |
| | | Mn (× 10⁴) | | 8.8 | 2.8 | 2.8 | 2.3 | 3.1 | 3.2 | 3.1 | 2.3 | 2.3 | 2.1 |
| | | Mw/Mn | | 1.4 | 4.3 | 4.6 | 3.9 | 5.5 | 14 | 13 | 5.7 | 5.2 | 3.1 |
| Lubricating oil composition | Formulation (% by mass) | Polymer | | 4.1 | 2 | 2 | 2 | 2 | 2 | 2 | 2 | 2 | 2 |
| | | MoDTC | | - | - | - | - | - | - | - | - | - | - |
| | | YUBASE 4 | | 98 | 98 | 99 | 98 | 98 | 98 | 98 | 98 | 98 | 98 |
| | | Total | | 100 | 100 | 100 | 100 | 100 | 100 | 100 | 100 | 100 | 100 |
| | Evaluation | Friction coefficient at 40°C | | 0.150 | 0.145 | 0.153 | 0.151 | 0.150 | 0.148 | 0.148 | 0.149 | 0.145 | 0.121 |

**[Table 5]**

| | | | | Example 30 | Example 31 | Example 32 | Example 33 | Example 34 | Example 35 | Example 36 | Example 37 | Example 38 | Example 39 |
|---|---|---|---|---|---|---|---|---|---|---|---|---|---|
| | Macromonomer | Used macromonomer No. | | M2 | M2 | M2 | M3 | M3 | M3 | M3 | M1 | M2 | M1 |
| | | Macromonomer (M) | | 25 | 25 | 25 | 25 | 25 | 25 | 25 | 25 | 50 | 25 |
| | | Alkyl (meth)acrylate (a) having 11 to 30 carbon atoms | LA | 17 | 18 | 17 | 18 | 17 | 18 | 17 | 17 | - | 18 |
| | | | SLMA | 24.5 | 24.5 | 24.5 | 24.5 | 24.5 | 24.5 | 24.5 | 24.5 | 49 | 24.5 |
| | | Polar group-containing (meth)acrylate (b) | 4HBA | 3 | - | - | 1 | - | - | - | - | - | - |
| | | | HBA | - | 1 | 3 | - | - | 1 | 3 | - | - | - |
| Polymer | | | ARON DA | - | - | - | - | - | - | - | 3 | - | - |
| | Polymer formulation (% by mass) | | AE-200 | - | - | - | - | - | - | - | - | 1 | - |
| | | | AE-400 | - | - | - | - | - | - | - | - | - | 1 |
| | | Alkyl (meth)acrylate (c) having 1 to 10 carbon atoms | nBA | 55 | 56 | 55 | 56 | 55 | 56 | 55 | 55 | 49 | 56 |
| | | | MMA | 0.5 | 0.5 | 0.5 | 0.5 | 0.5 | 0.5 | 0.5 | 0.5 | 1 | 0.5 |
| | | Total | | 100 | 100 | 100 | 100 | 100 | 100 | 100 | 100 | 100 | 100 |
| | Evaluation | Mw (× 10⁴) | | 7.0 | 6.2 | 6.5 | 5.9 | 6.2 | 5.8 | 6.1 | 5.5 | 3.8 | 19 |
| | | Mn (× 10⁴) | | 2.2 | 2.1 | 2.2 | 2.0 | 2.0 | 2.0 | 2.0 | 1.7 | 1.3 | 2.6 |
| | | Mw/Mn | | 3.2 | 3.0 | 3.0 | 3.0 | 3.1 | 2.9 | 3.1 | 3.2 | 2.9 | 7.3 |
| Lubricating oil composition | Formulation (% by mass) | Polymer | | 2 | 2 | 2 | 2 | 2 | 2 | 2 | 2 | 2 | 2 |
| | | MoDTC | | - | - | - | - | - | - | - | - | - | - |
| | | YUBASE4 | | 98 | 98 | 98 | 98 | 98 | 98 | 98 | 98 | 98 | 98 |
| | | Total | | 100 | 100 | 100 | 100 | 100 | 100 | 100 | 100 | 100 | 100 |
| | Evaluation | Friction coefficient at 40°C | | 0,118 | 0.122 | 0.122 | 0.120 | 0.119 | 0.122 | 0.123 | 0 134 | 0.123 | 0.127 |

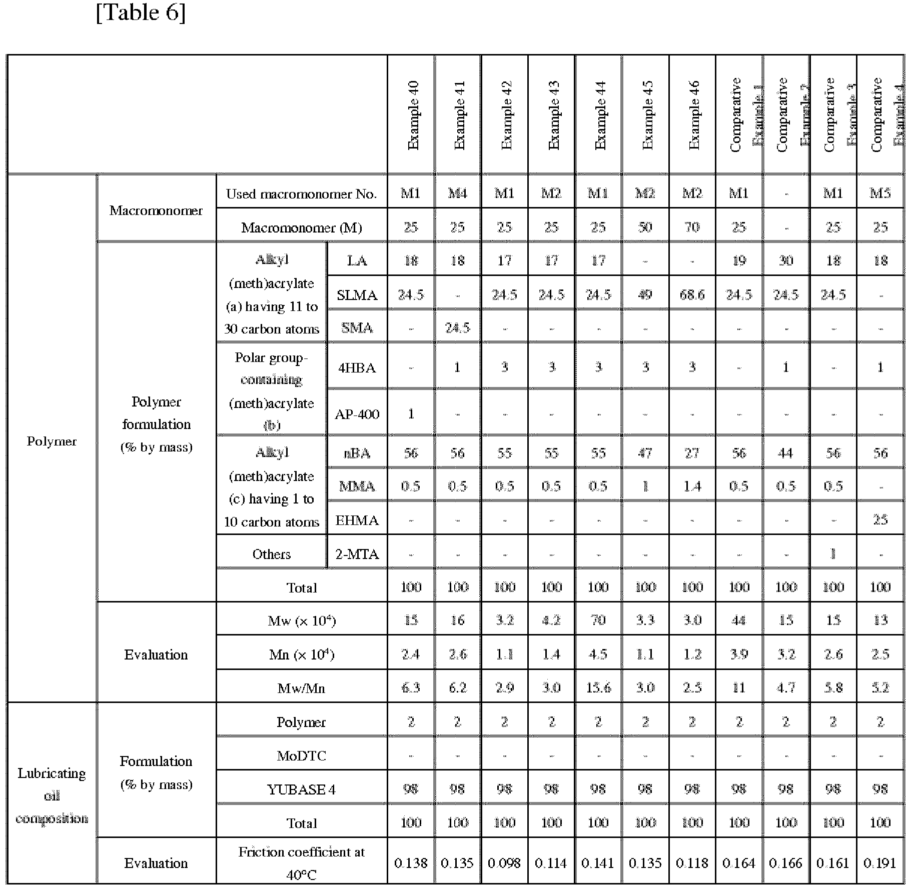

The abbreviations in Tables 1 to 6 are as follows.
· SLMA: a mixture of an alkyl methacrylate having an alkyl group having 12 carbon atoms and an alkyl methacrylate having an alkyl group having 13 carbon atoms (trade name: Acrylic Ester SL, manufactured by Mitsubishi Chemical Corporation)
· MMA: methyl methacrylate (trade name: Acrylic Ester M, manufactured by Mitsubishi Chemical Corporation)
· SMA: stearyl methacrylate (trade name: Light Ester S, manufactured by Kyoeisha Chemical Co., Ltd.)
· EHMA: 2-ethylhexyl methacrylate (trade name: Acrylic Ester EH, manufactured by Mitsubishi Chemical Corporation)
· M1: a macromonomer synthesized in Production Example 2
· M2: a macromonomer synthesized in Production Example 3
· M3: a macromonomer synthesized in Production Example 4
· M4: a macromonomer synthesized in Production Example 5
· M5: a macromonomer synthesized in Production Example 6
· LA: lauryl acrylate (trade name: LA, manufactured by Osaka Organic Chemical Industry Ltd.)
· 4HBA: 4-hydroxybutyl acrylate (trade name: 4HBA, manufactured by Mitsubishi Chemical Corporation)
· HEA: hydroxyethyl acrylate (trade name: HEA, manufactured by Osaka Organic Chemical Industry Ltd.)
- GLM: glycerin monomethacrylate (trade name: BLEMMER GLM, manufactured by NOF Corporation)
· AA: acrylic acid (trade name: Acrylic Acid, manufactured by Mitsubishi Chemical Corporation)
· DEAA: diethylacrylamide (trade name: DEAA, manufactured by KJ Chemicals Corporation)
· PP800: polypropylene glycol monomethacrylate (trade name: BLEMMER PP-800, manufactured by NOF Corporation, average number of moles of propylene oxides added: 13, terminal: hydroxyl group)
· KBM503: 3-methacryloxypropyltrimethoxysilane (trade name: KBM503, manufactured by Shin-Etsu Chemical Co., Ltd.)
· ARON DA: dimethylaminoethyl acrylate (trade name: ARON DA, manufactured by Toagosei Co., Ltd.)
· AE-200: polyethylene glycol monoacrylate (trade name: BLEMMER AE-200, manufactured by NOF Corporation, number of moles of ethyleneoxy groups added: about 4.5)
· AE-400: polyethylene glycol monoacrylate (trade name: BLEMMER AE-400, manufactured by NOF Corporation, number of moles of ethyleneoxy groups added: about 10)
· AP-400: polypropylene glycol monoacrylate (trade name: BLEMMER AP-400, manufactured by NOF Corporation, number of moles of propyleneoxy groups added: about 6)
· nBA: n-butyl acrylate (trade name: Butyl Acrylate, manufactured by Mitsubishi Chemical Corporation)
· 2-MTA: 2-methoxyethyl acrylate (trade name: 2-MTA, manufactured by Osaka Organic Chemical Industry Ltd.)

### Industrial Applicability

According to the polymer of the present invention, it is possible to provide a lubricating oil additive, a friction reducer for a lubricating oil, and a lubricating oil composition, which have a high friction reducing effect.

## Claims

1. A polymer comprising:
a main chain polymer structure; and
a side chain polymer structure,
wherein the side chain polymer structure contains a constitutional unit derived from an alkyl (meth)acrylate (a) having an alkyl group having 11 to 30 carbon atoms, and
at least one of the main chain polymer structure or the side chain polymer structure contains a constitutional unit derived from a (meth)acrylate (b) represented by General Formula (1), 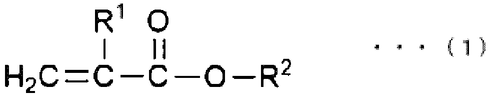
(in the formula, R¹ represents a hydrogen atom or a methyl group, and R² represents a hydrogen atom or an organic group containing a polar group, provided that the organic group containing a polar group does not include an alkoxyalkyl group).

2. The polymer according to Claim 1, wherein a polar group of the (meth)acrylate (b) is a hydroxyl group, a carboxy group, an amino group, or an amide group.

3. The polymer according to Claim 1, wherein a polar group of the (meth)acrylate (b) is a hydroxyl group.

4. The polymer according to Claim 1, wherein the polymer further contains a constitutional unit derived from an alkyl (meth)acrylate (c) having an alkyl group having 1 to 10 carbon atoms.

5. The polymer according to Claim 1, wherein the main chain polymer structure contains a constitutional unit derived from an alkyl (meth)acrylate (a) having an alkyl group having 11 to 30 carbon atoms.

6. The polymer according to Claim 1, wherein the main chain polymer structure contains a constitutional unit derived from a vinyl-based radical polymerizable monomer (m1), and at least a part of the constitutional unit derived from the vinyl-based radical polymerizable monomer (m1) is the constitutional unit derived from the (meth)acrylate (b).

7. The polymer according to Claim 6, wherein the side chain polymer structure contains a constitutional unit derived from a macromonomer (M).

8. The polymer according to Claim 7, wherein the macromonomer (M) contains the constitutional unit derived from the alkyl (meth)acrylate (a) having an alkyl group having 11 to 30 carbon atoms.

9. The polymer according to Claim 7, wherein the macromonomer (M) has a structure of Formula (2), 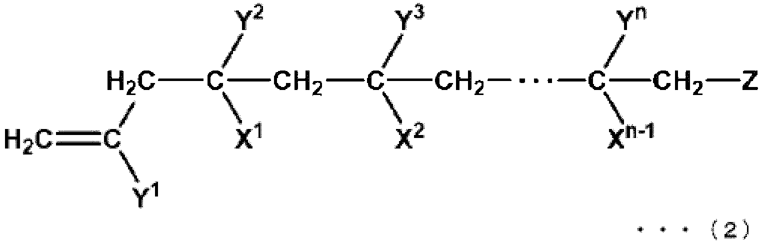 (in the formula, X¹ to Xⁿ⁻¹ each independently represent a hydrogen atom, a methyl group, or CH₂OH, Y¹ to Yⁿ each independently represent a substituent other than X¹ to Xⁿ⁻¹ which is bonded to a vinyl group of a vinyl-based radical polymerizable monomer (m2) that is a monomeric constitutional unit of the macromonomer (M), Z represents a terminal group, and n represents an integer of 2 to 10000).

10. A lubricating oil additive comprising:
the polymer according to any one of Claims 1 to 9.

11. A friction reducer for a lubricating oil, comprising:
the polymer according to any one of Claims 1 to 9; and
a solvent.

12. A lubricating oil composition comprising:
the friction reducer for a lubricating oil according to Claim 11.

13. The friction reducer for a lubricating oil according to Claim 11, wherein the solvent is a base oil.

14. A lubricating oil composition comprising:
the friction reducer for a lubricating oil according to Claim 13.
